# EUROPEAN PATENT APPLICATION

(11) **EP 4 542 749 A1**
(43) Date of publication of application: **23.04.2025**
(21) Application number: 23825882.6
(22) Date of filing: 31.03.2023
(51) Int. Cl.: H01M 50/30

(54) **BATTERY CELL, BATTERY AND ELECTRIC DEVICE**

(30) Priority: 21.06.2022 WO PCT/CN2022/100171; 21.06.2022 WO PCT/CN2022/100174; 19.01.2023 WO PCT/CN2023/073107
(71) Applicant: Contemporary Amperex Technology (Hong Kong) Limited, Central, Central And Western District (HK)
(72) Inventor: SU, Huasheng, Ningde, Fujian 352100 (CN); CHENG, Xing, Ningde, Fujian 352100 (CN); XING, Chengyou, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/085655
(87) International publication number: WO 2023/246227

(57) **Abstract**

Embodiments of the present application provide a battery cell, a battery, and an electrical device. The battery cell includes: a shell, having a first wall; a pressure relief mechanism, disposed at the first wall; an electrode lead-out portion, disposed on the shell; an electrode assembly, disposed in the shell, the electrode assembly being provided with a tab; an adapter member, connecting the electrode lead-out portion to the tab; and a gap control portion, disposed in the shell, the gap control portion being configured to be able to restrict the adapter member from shielding a pressure relief hole formed by the pressure relief mechanism in the event of thermal runaway of the battery cell. The battery cell has relatively high safety.

## Description

### CROSS-REFERENCE TO RELATED APPLICATIONS

The present application claims priorities to international patent application No. PCT/CN2022/100174 titled "BATTERY CELL, BATTERY AND ELECTRICAL DEVICE", filed on June 21, 2022, international patent application No. PCT/CN2022/100171 titled "BATTERY CELL, BATTERY AND ELECTRICAL DEVICE", filed on June 21, 2022, and international patent application No. PCT/CN2023/073107 titled "BATTERY CELL, BATTERY AND ELECTRICAL DEVICE", filed on January 19, 2023, all of which are incorporated herein by reference in its entirety.

### TECHNICAL FIELD

The present application relates to the technical field of batteries, and in particular, to a battery cell, a battery, and an electrical device.

### BACKGROUND

Energy saving and emission reduction are the key to the sustainable development of the automotive industry, and electric vehicles have become an important part of the sustainable development of the automotive industry by virtue of their advantages of energy saving and environmental protection. For electric vehicle, battery technology is a crucial factor driving the development thereof.

In the development of the battery technology, in addition to improving the energy density of a battery, safety is also an issue that cannot be ignored. Therefore, how to improve the safety of the battery is a technical problem of the battery technology that needs to be solved urgently.

### SUMMARY

The present application provides a battery cell, a battery, and an electrical device. The battery cell has relatively high safety.

The present application is realized by the following technical solution:
In a first aspect, the present application provides a battery cell, including: a shell, having a first wall, the first wall being provided with a pressure relief mechanism; an electrode lead-out portion, disposed on the shell; an electrode assembly, disposed in the shell, the electrode assembly being provided with a tab; an adapter member, connected to the electrode lead-out portion and the tab; and a gap control portion, disposed in the shell, the gap control portion being configured to be able to restrict the adapter member from shielding a pressure relief hole formed by the pressure relief mechanism in the event of the thermal runaway of the battery cell.

For the battery cell according to embodiments of the present application, the gap control portion is disposed in the shell. In the event of the thermal runaway of the battery cell, a high-temperature and high-pressure gas generated in the shell is ejected and pushed toward the pressure relief mechanism so that the pressure relief mechanism performs an action or is destroyed to form a pressure relief hole for the relief of an internal pressure or a temperature. However, when heated and stressed, the adapter member disposed in the shell is easy to be deformed to shield the pressure relief hole of the pressure relief mechanism. The gap control portion of the present application disposed in the shell is able to effectively restrict the deformed or moved adapter member from shielding the pressure relief hole, thereby reducing a risk of the battery cell not being able to smoothly discharge a gas and relieve a pressure because the adapter member shields the pressure relief hole, thus reducing a risk of the battery cell for catching a fire or exploding due to poor pressure relief in the event of the thermal runaway of the battery cell, and effectively improving the safety of the battery cell.

According to some embodiments of the present application, the gap control portion includes a support member. The support member is disposed between the first wall and the adapter member. The support member is configured to be able to restrict the adapter member from shielding the pressure relief hole formed by the pressure relief mechanism in the event of the thermal runaway of the battery cell.

In the above solution, the support member is disposed between the first wall and the adapter member, and is able to form a support between the first wall and the adapter member in the event of the thermal runaway of the battery cell, which is conducive to restricting the adapter member from shielding the pressure relief hole. Therefore, the battery cell is able to relieve the pressure in a timely manner.

According to some embodiments of the present application, the support member has a melting point higher than 200°C.

In the above technical solution, the support member has the melting point higher than 200°C, thereby effectively reducing the influence of the high-temperature and high-pressure gas on the structural stability of the support member, and hence effectively ensuring the performance stability of the support member.

According to some embodiments of the present application, the support member is a metal member.

In the above solution, the support member made of metal has a higher structural strength, thereby effectively ensuring the shielding and limiting effects of the support member on the adapter member. In addition, the support member made of metal has the relatively high melting point, thereby effectively ensuring the structural stability of the support member in a high-temperature environment.

According to some embodiments of the present application, the support member is fixed to the first wall.

In the above solution, the support member is fixed to the first wall so that the support member is stably disposed in the battery cell, which is conducive to improving the connection stability of the support member, and thus improves the stress stability of the support member.

According to some embodiments of the present application, the support member and the first wall are integrally molded.

In the above solution, the support member and the first wall are integrally molded, which is conducive to manufacturing and assembly while effectively ensuring the structural strength of the support member.

According to some embodiments of the present application, the support member is disposed around the pressure relief mechanism.

In the above solution, the support member is disposed around the pressure relief mechanism to form a stable support around the pressure relief mechanism, thereby further improving the stability of the support member in supporting and limiting the adapter member.

According to some embodiments of the present application, the support member includes a first sub-support member and a second sub-support member. The pressure relief mechanism is disposed between the first sub-support member and the second sub-support member.

In the above solution, the pressure relief mechanism is disposed between the first sub-support member and the second sub-support member, which is conducive to supporting the adapter member in two positions and further ensures the stop effect of the support member.

According to some embodiments of the present application, the support member covers on and is disposed at the pressure relief mechanism. The support member has a second exhaust channel for communicating an internal space of the support member with an external space of the support member.

In the above solution, the support member covers on and is disposed at the pressure relief mechanism. The support member protects the pressure relief mechanism like a shield, which can effectively ensure the structural strength of the support member itself, thereby effectively ensuring the stress stability of the support member. The support member covers on and is disposed at the pressure relief mechanism, which can fully restrict the adapter member from shielding the pressure relief hole of the battery cell. The support member is provided with the second exhaust channel for communicating the internal space of the support member with the external space of the support member. Therefore, it is ensured that in the event of the thermal runaway of the battery cell, the gas in the battery cell is able to reach the pressure relief mechanism through the second exhaust channel smoothly, thereby ensuring that the pressure relief mechanism relieves the pressure smoothly.

According to some embodiments of the present application, the support member includes a first bottom wall and a first side wall. The first bottom wall and the pressure relief mechanism are disposed opposite to each other in a thickness direction of the first wall. A gap is formed between the first bottom wall and the pressure relief mechanism. The first side wall connects the first bottom wall to the first wall. The second exhaust channel is formed in the first side wall.

In the above solution, the first bottom wall is disposed opposite to the first wall so that the gap is formed between the first bottom wall and the pressure relief mechanism. The first bottom wall is oriented toward the electrode assembly to restrict the adapter member from shielding the pressure relief mechanism. In addition, the second exhaust channel is formed in the first side wall, which can effectively reduce a risk of the second exhaust channel being shielded by the adapter member, and effectively ensures the smoothness of the pressure relief of the pressure relief mechanism.

According to some embodiments of the present application, the battery cell further includes an insulator. The insulator is at least partially positioned between the first wall and the adapter member to insulate and isolate the first wall from the adapter member. The support member has a melting point higher than that of the insulator. The support member is configured to prevent the adapter member from shielding the pressure relief hole formed by the pressure relief mechanism in the event of the thermal runaway of the battery cell after the insulator is melted.

In the above solution, the insulator is configured to insulate and isolate the first wall from the adapter member, thereby avoiding short-circuiting caused by the contact between the first wall and the adapter member. The support member has the melting point higher than that of the insulator. Therefore, the insulator is melted and the support member is less likely to be melted in the event of the thermal runaway of the battery cell, which is conducive to preventing the adapter member from shielding the pressure relief hole.

According to some embodiments of the present application, the insulator includes a third surface facing the first wall. A first groove is formed on the third surface. At least a part of the support member is accommodated within the first groove.

In the above solution, the first groove is disposed to avoid the support member excessively occupying a space inside the battery cell while ensuring the insulating effect of the first wall and the adapter member, thereby effectively ensuring the energy density of the battery cell.

According to some embodiments of the present application, the gap control portion includes a reinforcing portion. The adapter member includes a first connecting section. The first connecting section is configured to be connected to the tab. The reinforcing portion is disposed at the first connecting section.

In the above solution, the reinforcing portion is disposed at the first connecting section, so that the strength of the first connecting section is reinforced, which is able to reduce the difficulty of the first connecting section to be deformed by a high-pressure gas impact in the event of the thermal runaway of the battery cell, reduces the deformation amount of the first connecting section, and thus reduces a risk of the adapter member for shielding the pressure relief hole formed by the pressure relief mechanism.

According to some embodiments of the present application, in the thickness direction of the first wall, a projection of the reinforcing portion on the first wall at least covers a part of the pressure relief mechanism.

In the above solution, because the projection of the reinforcing portion on the first wall covers at least a part of the pressure relief mechanism, it is more difficult for the adapter member to be deformed in the event of the thermal runaway of the battery cell, which reduces a risk of the adapter member for shielding the pressure relief hole in the event of the thermal runaway of the battery cell.

According to some embodiments of the present application, the gap control portion further includes the support member. At least a part of the support member is disposed between the first wall and the reinforcing portion.

In the above solution, the support member is overlapped at least partially with the reinforcing portion, so that the support member is able to be abutted against between the first wall and the reinforcing portion in the event of the thermal runaway of the battery cell, thereby forming a pressure relief channel between the reinforcing portion and the first wall, and being conducive to the flow of the gas toward the pressure relief mechanism via the pressure relief channel, and being conducive to the pressure being relieved by the pressure relief mechanism.

According to some embodiments of the present application, the support member includes a first sub-support member and a second sub-support member, and the pressure relief mechanism is disposed between the first sub-support member and the second sub-support member.

In the above solution, the pressure relief mechanism is disposed between the first sub-support member and the second sub-support member, which is conducive to stopping the reinforcing portion at two positions and further ensures the stop effect of the support member.

According to some embodiments of the present application, in the thickness direction of the first wall, the projection of the reinforcing portion on the first wall covers at least a part of the first sub-support member and/or at least a part of the second sub-support member.

In the above solution, when the projection of the reinforcing portion covers at least a part of the first sub-support member and at least a part of the second sub-support member, a simply-supported beam can be formed, thereby reducing a risk of deformation of the reinforcing portion. When the projection of the reinforcing portion covers at least a part of the first sub-support member or at least a part of the second sub-support member, at least a part of the first sub-support member or at least a part of the second sub-support member can block the adapter member from being deformed toward the pressure relief mechanism, which increases the difficulty of deformation of the adapter member, and reduces a risk of the deformation of the adapter member that shields the pressure relief hole.

According to some embodiments of the present application, a projection of the center of the first sub-support member and/or the center of the second sub-support member on the adapter member falls into the reinforcing portion in the thickness direction.

In the above solution, when the projection of the center of the first sub-support member and the center of the second sub-support member on the adapter member falls into the reinforcing portion, it is ensured that the reinforcing portion has a relatively large overlap area with the first sub-support member and the second sub-support member, so that the first sub-support member and the second sub-support member have a better shielding effect on the reinforcing portion in the event of the thermal runaway of the battery cell, thereby reducing a risk of the deformation of the reinforcing portion that shields or clogs the pressure relief hole. When the projection of the center of the first sub-support member or the center of the second sub-support member on the adapter member falls into the reinforcing portion, the first sub-support member or the second sub-support member has a relatively large overlap area with the reinforcing portion. In the event of the thermal runaway of the battery cell, the first sub-support member or the second sub-support member has a better shielding effect on the reinforcing portion, which can reduce the risk of the deformation of the reinforcing portion that shields or clogs the pressure relief hole.

According to some embodiments of the present application, the distance D between a projection of the support member on the first wall in the thickness direction of the first wall and the pressure relief mechanism meets 1 mm ≤ D ≤ 20 mm.

In the above solution, the distance D between the projection of the support member on the first wall in the thickness direction and the pressure relief mechanism meets the above range, which, on the one hand, is conducive to processing and manufacturing and on the other hand, has a better stop effect on the adapter member and reduces the risk of the deformation of the adapter member that shields and clogs the pressure relief hole in the event of the thermal runaway of the battery cell. If the distance D between the projection of the support member on the first wall in the thickness direction and the pressure relief mechanism is relatively small (e.g., less than 1 mm), the processing is difficult. If the distance D between the projection of the support member on the first wall in the thickness direction and the pressure relief mechanism is relatively large (e.g., greater than 20 mm), the zone of the adapter member corresponding to the pressure relief mechanism can be deformed in the event of the thermal runaway of the battery cell to shield and clog the pressure relief hole.

According to some embodiments of the present application, 2mm ≤ D ≤ 5mm.

In the above solution, compared to D < 2mm, when D ≥ 2mm, the difficulty in processing and manufacturing is lower. Compared to D > 5mm, when D ≤ 5mm, the support member has a better stop effect on the adapter member, which effectively reduces the risk of the deformation of the adapter member that shields and clogs the pressure relief hole in the event of the thermal runaway of the battery cell.

According to some embodiments of the present application, in an unfolded state of the adapter member, a positive projection of the central axis of the adapter member in a width direction thereof on the first wall does not pass through the center of the pressure relief mechanism, or, the first wall is provided with the electrode lead-out portion. A positive projection of the extension line of the central axis of the electrode lead-out portion in a width direction thereof on the first wall does not pass through the center of the pressure relief mechanism.

In the above solution, the central axis of the adapter member can be an axis perpendicular to a width direction of the adapter member. The positive projection of the central axis of the adapter member does not pass through the center of the pressure relief mechanism, so that the pressure relief mechanism is disposed eccentrically relative to the central axis of the adapter member. The pressure relief mechanism occupies a relatively large space on the side of the central axis of the adapter member, and the pressure relief mechanism occupies a relatively small space on the other side of the central axis of the adapter member. Other functional zones (for example, a code identifying zone) can be disposed on the other side of the first wall positioned at the central axis of the adapter member to rationally utilize a space on the two sides of the central axis of the adapter member. The central axis of the electrode lead-out portion can be an axis perpendicular to the width direction of the electrode lead-out portion. A positive projection of the central axis of the electrode lead-out portion does not pass through the center of the pressure relief mechanism, so that the pressure relief mechanism is disposed eccentrically relative to the central axis of the electrode lead-out portion. The pressure relief mechanism occupies a relatively large space on the side of the central axis of the electrode lead-out portion, and the pressure relief mechanism occupies a relatively small space on the other side of the central axis of the electrode lead-out portion. Other functional zones (for example, the code identifying zone) can be disposed on the other side of the first wall positioned at the central axis of the electrode lead-out portion to rationally utilize a space on the two sides of the central axis of the electrode lead-out portion.

According to some embodiments of the present application, the first wall is provided with the electrode lead-out portion. The code identifying zone is disposed on the outer surface of the first wall. The code identifying zone and the pressure relief mechanism are located on the side of the electrode lead-out portion.

In the above solution, the code identifying zone and the pressure relief mechanism are located on the side of the electrode lead-out portion, thereby rationally utilizing a space of the first wall.

According to some embodiments of the present application, the code identifying zone is disposed on the outer surface of the first wall. The centers of the code identifying zone and the pressure relief mechanism are disposed on the two sides of the central axis of the adapter member in the width direction thereof, respectively.

In the above solution, the code identifying zone is disposed to reasonably utilize the space of the first wall and be conducive to the acquisition of information about the battery cell.

According to some embodiments of the present application, an injection hole is disposed in the first wall.

In the above solution, in an embodiment in which the positive projection of the central axis of the adapter member in the width direction thereof on the first wall does not pass through the center of the pressure relief mechanism, the injection hole is disposed in the first wall, which is able to reasonably utilize the space of the first wall, and allow a structure on the first wall to be compact.

According to some embodiments of the present application, the gap control portion includes the first sub-support member and the second sub-support member. The pressure relief mechanism is disposed between the first sub-support member and the second sub-support member. The first sub-support member and the second sub-support member are configured to be able to restrict the adapter member from shielding the pressure relief hole formed by the pressure relief mechanism in the event of the thermal runaway of the battery cell. The gap control portion further includes the reinforcing portion. The adapter member includes the first connecting section. The first connecting section is configured to be connected to the tab. The reinforcing portion is disposed in the first connecting section. A projection of at least a part of the first sub-support member or at least a part of the second sub-support member on the adapter member is overlapped with the reinforcing portion in the thickness direction of the first wall. The battery cell further includes the insulator. The insulator is located between the first wall and the adapter member. The insulator is configured to insulate and isolate the first wall from the adapter member. The insulator includes the third surface facing the first wall. The plurality of first grooves are formed on the third surface. At least a part of the first sub-support member and at least a part of the second sub-support member are disposed in one of the first grooves, respectively.

In the above solution, the pressure relief mechanism is disposed between the first sub-support member and the second sub-support member, which is conducive to stopping the adapter member at the two positions, thereby further ensuring the stop effect of the support member. When the projection of the reinforcing portion covers at least a part of the first sub-support member or at least a part of the second sub-support member, at least a part of the first sub-support member or at least a part of the second sub-support member can block the adapter member from being deformed toward the pressure relief mechanism, which increases the difficulty of the deformation of the adapter member, and reduces the risk of the deformation of the adapter member that shields the pressure relief hole. At least a part of the first sub-support member and at least a part of the second sub-support member are disposed in one of the first grooves, respectively, which is also able to reduce a space occupied by a structure after the first sub-support member and the second sub-support member are assembled with the insulator while ensuring the insulating effect of the first wall and the adapter member.

According to some embodiments of the present application, the insulator further includes a fourth surface. The fourth surface is disposed facing away from the first wall. A protruding portion is formed at a position on the fourth surface corresponding to the first groove. The protruding portion corresponding to the first sub-support member is opposite to the reinforcing portion in the thickness direction. The protruding portion corresponding to the second sub-support member is opposite to the zone of the first connecting section which is not provided with the reinforcing portion.

In the above solution, the protruding portion corresponding to the first sub-support member is in contact with the reinforcing portion. The protruding portion corresponding to the second sub-support member is in contact with the first connecting section, so that the first sub-support member and the second sub-support member, after cooperating with the insulator, is able to have a better limiting effect on the adapter member and the reinforcing portion.

According to some embodiments of the present application, in the thickness direction, the height G1 of the protruding portion corresponding to the first sub-support member protruding from the fourth surface is disclosed. The height G2 of the protruding portion corresponding to the second sub-support member protruding from the fourth surface is disclosed, where G2 > G1.

In the above solution, the two protruding portions have a height difference, which, on the one hand, can be conducive to the placement of the reinforcing portion. On the other hand, the protruding portion corresponding to the second sub-support member can better cooperate with the zone of the first connecting section which is not provided with the reinforcing portion.

According to some embodiments of the present application, the shell further includes a second wall. The second wall and the first wall are disposed opposite to each other in the thickness direction of the first wall. The second wall and the first wall are both provided with the pressure relief mechanism.

In the above solution, the second wall and the first wall are both provided with the pressure relief mechanism, which is conducive to the timely relief of a pressure inside the battery cell at the opposite ends of the shell, thereby allowing the battery cell to be highly reliable.

According to some embodiments of the present application, the tab includes a first tab and a second tab. The first tab and the second tab have opposite electrodes. The adapter member includes a first adapter member and a second adapter member. The first adapter member is disposed in correspondence to the first wall and connected to the first tab. The second adapter member is disposed in correspondence to the second wall and connected to the second tab. In the unfolded state of the first adapter member, a positive projection of the central axis of the first adapter member in a width direction thereof on the first wall does not pass through the center of the pressure relief mechanism disposed on the first wall. In the unfolded state of the second adapter member, a positive projection of the central axis of the second adapter member in a width direction thereof on the second wall passes through the center of the pressure relief mechanism disposed on the second wall.

In the above solution, the positive projection of the central axis of the first adapter member in the width direction thereof on the first wall does not pass through the center of the pressure relief mechanism disposed on the first wall. Other functional zones (for example, the code identifying zone and the injection hole) can be disposed on the first wall. The positive projection of the central axis of the second adapter member in the width direction thereof on the second wall passes through the center of the pressure relief mechanism disposed on the second wall. The second wall can be provided with the fewer functional zones for being connected to other components.

According to some embodiments of the present application, the shell includes a housing. The housing has openings at the opposite ends. The first wall and the second wall are respectively connected to the openings at the two ends of the housing. The electrode lead-out portion includes a positive electrode lead-out portion and a negative electrode lead-out portion. The positive electrode lead-out portion is disposed at the first wall. The negative electrode lead-out portion is disposed at the second wall.

In the above solution, the positive electrode lead-out portion is disposed at the first wall, and the negative electrode lead-out portion is disposed at the second wall, which is conducive to the electrical connection of the battery cell to other components. When the positive projection of the central axis of the first adapter member in the width direction thereof on the first wall does not pass through the center of the pressure relief mechanism disposed on the first wall, the other functional zones (for example, the code identifying zone and the injection hole) can be disposed on the first wall.

According to some embodiments of the present application, the reinforcing portion is a first flipping portion of the first connecting section. The first connecting section has a first surface facing the first wall and a second surface away from the first wall. The first flipping portion is bent to the side of the first surface or the first flipping portion is bent to the side of the second surface.

In the above solution, the reinforcing portion is the first flipping portion. The first flipping portion is bent to the side of the first surface or the first flipping portion is bent to the side of the second surface, which is conducive to processing and molding.

According to some embodiments of the present application, the first flipping portion is bent to the side of the first surface and the first flipping portion is affixed to the first surface; or, the first flipping portion is bent to the side of the second surface and the first flipping portion is affixed to the second surface.

In the above solution, the first flipping portion is affixed to the first surface or the second surface, thereby reducing a risk of the upwarp of the first flipping portion and increasing the difficulty of the deformation of the reinforcing portion.

According to some embodiments of the present application, the first connecting section has the first surface facing the first wall and the second surface away from the first wall. A protrusion is formed on the first surface. The protrusion is the reinforcing portion.

According to some embodiments of the present application, a second groove is formed at the position of the second surface corresponding to the protrusion.

In the above solution, the second groove corresponding to the protrusion is formed on the second surface, which is conducive to the processing and molding of the reinforcing portion on the one hand, and is able to reduce the weight of the adapter member on the other hand.

According to some embodiments of the present application, the first connecting section has the first surface facing the first wall and the second surface away from the first wall. The reinforcing portion forms the protrusion on the second surface. The reinforcing portion forms the second groove at the position of the first surface corresponding to the protrusion.

In the above solution, the reinforcing portion forms the protrusion on the second surface and forms the second groove on the first surface, thereby increasing the strength of the adapter member and increasing the difficulty of the deformation of the adapter member toward the first wall.

According to some embodiments of the present application, a projection of the second groove on the first wall at least partially covers the pressure relief mechanism.

In the above solution, the projection of the second groove on the first wall at least partially covers the pressure relief mechanism, so that it is not easy for the reinforcing portion to be deformed to shield or clog the pressure relief hole, thereby ensuring the smooth pressure relief of the battery cell.

According to some embodiments of the present application, the second groove extends to the edge of the adapter member.

In the above solution, the second groove extends to the edge of the adapter member, which is conducive to the formation of a channel for the flow of the gas at the position of the reinforcing portion, is conducive to the flow of the gas toward the pressure relief mechanism via the reinforcing portion, and is conducive to the pressure being relieved by the pressure relief mechanism.

According to some embodiments of the present application, a first exhaust channel for communicating the interior of the second groove with the exterior of the second groove is disposed at the wall of the second groove.

In the above solution, the first exhaust channel for communicating the interior of the second groove with the exterior of the second groove is disposed at the wall of the second groove, so that the gas enters the second groove and flows toward the pressure relief mechanism, thereby ensuring the gas to flow smoothly, and being conducive to the pressure being relieved by the pressure relief mechanism.

According to some embodiments of the present application, in the thickness direction of the first wall, the distance C1 between the bottom surface of the second groove and the first wall is disclosed. The distance C2 between the first surface and the first wall is disclosed, where 0.5 mm ≤ C1-C2 ≤ 5 mm.

In the above solution, the distance C1 between the bottom surface of the second groove and the first wall and the distance C2 between the first surface and the first wall meet the above relationship, which ensures that the gas flows toward the pressure relief mechanism. Therefore, the reinforcing portion is not easy to clog the pressure relief hole even if the reinforcing portion is deformed. Further, it is able to also ensure that the reinforcing portion does not occupy a too much assembly space. It ensures that the battery cell has a relatively high energy density.

According to some embodiments of the present application, 1 mm ≤ C1-C2 ≤ 3 mm.

In the above solution, the distance C1 between the bottom surface of the second groove and the first wall and the distance C2 between the first surface and the first wall meet the above relationship, which further ensures that the gas flows smoothly toward the pressure relief mechanism, and at the same time reasonably utilizes the assembly space and ensures the energy density of the battery cell, compared to 0.5 mm ≤ C1-C2 ≤ 5 mm.

According to some embodiments of the present application, the battery cell further includes a second support member. The second support member includes a second bottom wall and a second side wall. The second bottom wall is affixed to the bottom surface of the second groove. The second side wall is formed on the edge of the second bottom wall. The second side wall is affixed to the side surface of the second groove.

In the above solution, the second support member is disposed in the second groove. The second bottom wall is affixed to the bottom surface of the second groove. The second side wall is affixed to the side surface of the second groove, which further reinforces the strength of the reinforcing portion, reduces risks of the pressure relief mechanism being shielded and clogged, and ensures that the pressure is relieved by the pressure relief mechanism.

According to some embodiments of the present application, the second support member further includes a second flipping portion. The second flipping portion is connected to the second side wall. The second flipping portion is located on the exterior of the second groove and affixed to the first surface.

In the above solution, the second flipping portion is affixed to the first surface, thereby ensuring that the second support member has a relatively large connection area with the adapter member, and ensuring that the second support member has a better connection stability with the adapter member.

According to some embodiments of the present application, the first connecting section includes a main body zone and a connecting zone. The connecting zone is connected to the tab. The reinforcing portion is disposed in the main body zone.

In the above solution, the connecting zone is connected to the tab, and the reinforcing portion is disposed in the main body zone, thereby avoiding that the reinforcing portion interferes with the connection of the first connecting section to the tab.

According to some embodiments of the present application, the connecting zone protrudes from the second surface. The height of the reinforcing portion protruding from the second surface is less than or equal to the height of the connecting zone protruding from the second surface.

In the above solution, the height of the reinforcing portion protruding from the second surface is less than or equal to the height of the connecting zone protruding from the second surface. The reinforcing portion occupies a less space in the thickness direction, thereby avoiding the interference with the connection of the connecting zone to the tab under the premise of ensuring the strength of the reinforcing portion.

According to some embodiments of the present application, the adapter member includes the first connecting section. The first connecting section is configured to be connected to the tab. The gap control portion is disposed on the side of the first connecting section away from the tab.

In the above solution, the gap control portion is disposed on the side of the first connecting section away from the tab, which is able to reinforce the strength of the first connecting section, increase the difficulty of the deformation of the first connecting section, and reduce the risk of the adapter member for shielding the pressure relief hole in the event of the thermal runaway of the battery cell.

According to some embodiments of the present application, the gap control portion includes the reinforcing portion and the support member. The reinforcing portion has a first face and a second face disposed opposite to each other in the thickness direction of the first wall. The first face is connected to the first connecting section. The support member protrudes from the second face. The support member is configured to cooperate with the first wall in the event of the thermal runaway of the battery cell to form the pressure relief channel.

In the above solution, the first face is connected to the first connecting section. The reinforcing portion is able to increase the strength of the first connecting section and increase the difficulty of the deformation of the first connecting section. The support member is able to cooperate with the first wall in the event of the thermal runaway of the battery cell to form the pressure relief channel, which is conducive to the pressure being relieved by the battery cell in a timely manner.

According to some embodiments of the present application, the adapter member includes the first connecting section. The first connecting section is configured to be connected to the tab. The gap control portion is disposed on the side of the first connecting section facing the tab.

In the above solution, the gap control portion is disposed on the side of the first connecting section facing the tab, which is able to increase the strength of the first connecting section, increase the difficulty of the deformation of the first connecting section, and reduce the risk of the adapter member for shielding the pressure relief hole in the event of the thermal runaway of the battery cell.

According to some embodiments of the present application, the gap control portion includes the reinforcing portion and the support member. The reinforcing portion has the first face and the second face disposed opposite to each other in the thickness direction of the first wall. The second face is connected to the first connecting section. The support member protrudes from the second face. The support member is configured to cooperate with the first connecting section and the first wall in the event of the thermal runaway of the battery cell to form the pressure relief channel.

In the above solution, the second surface is connected to the first connecting section. The support member protrudes from the second surface, which is able to reinforce the strength of the first connecting section and increase the difficulty of the deformation of the first connecting section. The support member is able to cooperate with the first connecting section and the first wall in the event of the thermal runaway of the battery cell to form the pressure relief channel, which is conducive to the pressure being relieved by the battery cell in a timely manner.

According to some embodiments of the present application, the first connecting section is provided with a concave portion corresponding to the support member. The support member is inserted in the concave portion.

In the above solution, the support member is inserted in the concave portion, which reduces the too much internal space of the battery cell occupied by the support member while ensuring the stability of the connection of the gap control portion to the first connecting section, thereby effectively ensuring the energy density of the battery cell.

According to some embodiments of the present application, the support member includes a first sub-support member and a second sub-support member, and the pressure relief mechanism is disposed between the first sub-support member and the second sub-support member.

In the above solution, the pressure relief mechanism is disposed between the first sub-support member and the second sub-support member, which is conducive to cooperating with the first wall at a plurality of positions, and is conducive to the formation of the pressure relief channel in the event of the thermal runaway of the battery cell.

According to some embodiments of the present application, the support member and the reinforcing portion are integrally molded.

In the above solution, the support member and the reinforcing portion are integrally molded, which is conducive to processing and manufacturing.

According to some embodiments of the present application, the tab is formed at the end of the electrode assembly close to the first wall. The electrode lead-out portion is disposed at the first wall.

In the above solution, the electrode lead-out portion is disposed at the first wall. The distance between the tab and the first wall is relatively small, so that the dimension of the adapter member in the thickness direction of the first wall is relatively small, which is conducive to achieving the electrical connection of the tab to the electrode lead-out portion.

In a second aspect, the present application provides a battery, including a battery cell provided in the above embodiments.

In a third aspect, the present application provides an electrical device, including a battery cell provided in the above embodiments.

Additional aspects and advantages of the present application will be given in part in the following description, in part as will become apparent from the following description, or as will be learned through the practice of the present application.

### BRIEF DESCRIPTION OF DRAWINGS

To describe the technical solutions of some embodiments of the present application more clearly, the following outlines the drawings used in the embodiments of the present application. Evidently, the drawings outlined below are merely a part of embodiments of the present application. A person of ordinary skill in the art may derive other drawings from the outlined drawings without making any creative efforts.
FIG. 1 is a schematic structural diagram of a vehicle according to some embodiments of the present application;
FIG. 2 is an exploded view of a battery provided according to some embodiments of the present application.
FIG. 3 is an exploded view of a battery cell according to some embodiments of the present application,
FIG. 4 shows an exploded view of a first wall, an adapter member and an insulator of a battery cell provided by some embodiments of the present application.
FIG. 5 shows a sectional view of a first wall and a support member in the event of thermal runaway of a battery cell provided by some embodiments of the present application.
FIG. 6 shows an exploded view of a first wall, an insulator and an support member of a battery cell provided by yet some embodiments of the present application.
FIG. 7 shows a sectional view of a first wall and a support member provided by yet some embodiments of the present application.
FIG. 8 shows a sectional view of a cooperating relationship between an insulator and a support member provided by some embodiments of the present application.
FIG. 9 shows a sectional view of a cooperating relationship between an insulator and a support member provided by further some embodiments of the present application.
FIG. 10 shows a schematic structural view of an adapter member with a reinforcing portion provided by some embodiments of the present application.
FIG. 11 shows a partial sectional view of a battery cell provided by some embodiments of the present application.
FIG. 12 shows a schematic structural view of an adapter member and a first wall provided by some embodiments of the present application.
FIG. 13 shows a schematic structural view of a first wall provided by some embodiments of the present application.
FIG. 14 shows a sectional view in the B-B direction of FIG. 13.
FIG. 15 shows a schematic view of an adapter member cooperating with a first wall in an unfolded state provided by some embodiments of the present application.
FIG. 16 shows a schematic view of an adapter member cooperating with a second wall in an unfolded state provided by some embodiments of the present application.
FIG. 17 shows a schematic structural view of a first flipping portion in an unfolded state on an adapter member provided by some embodiments of the present application.
FIG. 18 shows a schematic structural view of a first flipping portion in a folding state on an adapter member provided by some embodiments of the present application.
FIG. 19 shows a schematic structural view of a reinforcing portion provided by some embodiments of the present application.
FIG. 20 shows a schematic structural view of a reinforcing portion provided by some other embodiments of the present application.
FIG. 21 shows a schematic structural view of a reinforcing portion provided by yet some embodiments of the present application.
FIG. 22 shows a partially enlarged view at A of FIG. 10;
FIG. 23 shows a schematic view of a first exhaust channel provided by some embodiments of the present application.
FIG. 24 shows a sectional view of a part of components of a battery cell provided by some embodiments of the present application.
FIG. 25 shows a partial sectional view of a battery cell after thermal runaway (an insulator is melted) provided by some embodiments of the present application.
FIG. 26 shows a schematic view of the assembly of an adapter member with a gap cooperating portion provided by some embodiments of the present application.
FIG. 27 shows a sectional view of a reinforcing portion after cooperating with a first connecting section provided by some embodiments of the present application.
FIG. 28 shows a sectional view of a reinforcing portion after cooperating with a first connecting section provided by some other embodiments of the present application.
FIG. 29 shows a schematic view of the assembly of an adapter member with a gap cooperating portion provided by some other embodiments of the present application.
FIG. 30 shows a schematic structural view of an adapter member and a gap cooperating portion provided by some other embodiments of the present application.
FIG. 31 shows a sectional view of a reinforcing portion after cooperating with a first connecting section provided by yet some embodiments of the present application.
FIG. 32 shows a schematic structural view of a reinforcing portion cooperating with a first wall provided by some embodiments of the present application.
FIG. 33 shows a schematic structural view of a reinforcing portion cooperating with an insulator provided by some embodiments of the present application.
FIG. 34 shows a schematic structural view of a reinforcing portion cooperating with a first connecting section provided by some embodiments of the present application.

The drawings are not drawn to actual scale.

Description of reference signs: 1000-vehicle; 100-battery; 10-box body; 11-first portion; 12-second portion; 20-battery cell; 21-shell; 211-housing; 212-cover body; 213-first wall; 2131-code identifying zone; 214-second wall; 22-pressure relief mechanism; 221-pressure relief hole; 222-center of pressure relief mechanism; 23-electrode lead-out portion; 241-tab; 241a-first tab; 241b-second tab; 242-adapter member; 2421-first connecting section; 242a-main body zone; 242b-connecting zone; 242c-first adapter member; 242d-second adapter member; 2422-first surface; 2423-second surface; 2424-second connecting section; 2425-concave portion; 2426-third connecting section; 2427-first positioning portion; 2428-mounting hole; 243-reinforcing portion; 243a-first flipping portion; 243b-protrusion; 243c-second groove; 243d-first exhaust channel; 243e-first face; 243f-second face; 2431-second positioning portion; 25-electrode assembly; 251-main body portion; 260- gap control portion; 26-support member; 261-sub-support member; 261a-first sub-support member; 261b-second sub-support member; 262-first bottom wall; 263-first side wall; 2631-first sub-side wall; 2632-second sub-side wall; 264-second exhaust channel; 27-insulator; 271-third surface; 272-first groove; 2721-sub-groove; 2722-protruding portion; 273-fourth surface; 274-through hole; 28-second support member; 281-second bottom wall; 282-second side wall; 283-second flipping portion; 29-injection hole; 30-pressure relief channel; 200-controller; 300-motor.

### DETAILED DESCRIPTION OF EMBODIMENTS

In order to make the objective, technical solutions and advantages of the embodiments of the present application clearer, the technical solutions in the embodiments of the present application will be clearly and completely described below in conjunction with the accompanying drawings in the embodiments of the present application. It is obvious that the embodiments described are a part of the embodiments of the present application, and not all of them. Assemblies of the embodiments of the present application generally described and illustrated in the drawings herein can be arranged and designed in various different configurations.

Therefore, the following detailed description of the embodiments of the present application provided in the accompanying drawings is not intended to limit the scope of the present application as claimed, but merely represents selected embodiments of the present application. Based on the embodiments of the present application, all other embodiments obtained by a person of ordinary skill in the art without inventive work shall fall within the protection scope of the present application.

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of embodiments of the present application, the term "a plurality of" means two or more (inclusive of two).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the description of an embodiment of the present application, unless otherwise clearly specified and limited, the technical terms such as "disposed", "mounted", "connected", "connection", and "fixed" shall be understood in a general sense. For example, these technical terms may be a fixed connection, a detachable connection, or an integrated connection; or may be a mechanical connection or an electrical connection and a signal connection; or may be a direct connection, an indirect connection by using an intermediate medium, or may be an internal communication of two elements or an interaction of two elements. For a person of ordinary skill in the art, the specific meaning of the forgoing terms in an embodiment of the present application may be understood based on specific situations.

In the embodiments of the present application, the same reference numerals indicate the same components, and detailed descriptions of the same components are omitted in different embodiments for the sake of brevity. Understandably, dimensions, such as thickness, length, and width of various components in the embodiments of the present application shown in the accompanying drawings, and dimensions, such as overall thickness, length, and width of an integrated apparatus are merely illustrative descriptions, but do not constitute any limitation on the present application.

A battery referred to in embodiments of the present application refers to a single physical module including one or more battery cells to provide higher voltage and capacity. A plurality of battery cells can be connected in series, in parallel, or in series and in parallel. The battery can also include a box body for encapsulating one or more battery cells. The box body can prevent a liquid or other foreign objects from affecting the charging or discharging of the battery cell.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or battery module is accommodated in the box.

In some embodiments, the box body can be a part of a chassis structure of a vehicle. For example, the portion of the box body can become at least a part of a floor of the vehicle, or the portion of the box body can become at least a part of a cross beam and at least a part of a longitudinal beam of the vehicle.

In some embodiments, the battery can be an energy storage device. The energy storage device includes an energy storage container, an energy storage electrical cabinet, and the like.

In the present application, the battery cell can include a lithium-ion secondary battery, a lithium-ion primary battery, a lithium-sulfur battery, a sodium-lithium-ion battery, a sodium-ion battery or a magnesium-ion battery. The embodiments of the present application are not limited thereto. The battery cell can be in the form of a cylinder, a flat body, a cuboid, or other shapes. The embodiments of the present application are not limited thereto.

The battery cell includes an electrode assembly and an electrolyte solution. The electrode assembly consists of a positive electrode plate, a negative electrode plate, and a separator. The battery cell mainly relies on metal ions moving between the positive electrode plate and the negative electrode plate to work. The positive electrode plate includes a positive current collector and a positive active material layer. The positive active material layer is coated on the surface of the positive current collector. The positive current collector not coated with the positive active material layer protrudes from the positive current collector coated with the positive active material layer. The positive current collector not coated with the positive active material layer can be directly used as a positive tab. Taking a lithium-ion battery as an example, the material of the positive current collector can be aluminum. A positive active material can be lithium cobaltate, lithium iron phosphate, ternary lithium, lithium manganate or the like. The negative electrode plate includes a negative current collector and a negative active material layer. The negative active material layer is coated on the surface of the negative current collector. The negative current collector not coated with the negative active material layer protrudes from the negative current collector coated with the negative active material layer. The negative current collector not coated with the negative active material layer can be used directly as a negative tab. The material of the negative current collector can be copper. The negative active material can be carbon, silicon or the like. To ensure that a large current is passed without fusing, a plurality of positive tabs are disposed and stacked together. A plurality of negative tabs are disposed and stacked together. The material of the separator can be PP (polypropylene), PE (polyethylene), or the like. In addition, the electrode assembly can be a jelly-roll structure or a laminated structure. The embodiments of the present application are not limited thereto.

The battery cell is prone to cause fire and explosion in the event of thermal runaway, which is a major safety hazard. How to improve the safety performance of the battery is an urgent problem in the development of battery technology.

To effectively improve the safety performance of the battery cell, the inventor found that a pressure relief mechanism can be disposed on the battery cell. When a pressure or a temperature inside the battery cell rises suddenly in the event of the thermal runaway of the battery cell, the pressure relief mechanism is actuated to form a pressure relief hole. The pressure relief hole is communicated with the interior and exterior of the battery cell. The pressure inside the battery cell can be relieved outwards in time to prevent the battery cell from be exploded and catching a fire, thus effectively improve the safety performance of the battery cell.

However, the inventor noted that even though the pressure relief mechanism is disposed in the battery cell, the problem that the battery cell is prone to catch fire and explode due to the thermal runaway cannot be effectively solved.

The inventor analyzed reasons and found that an adapter member is usually disposed inside the battery cell to lead electric energy generated by the electrode assembly out of the battery cell through the adapter member. The interior of the battery cell generally also includes an insulator for insulating and isolating a shell from the adapter member. In the event of the thermal runaway of the battery cell, the pressure relief mechanism is actuated to form the pressure relief hole. The insulator is melted. A high temperature and high pressure gas inside the battery cell impacts the adapter member when flowing toward the pressure relief mechanism. At least a part of the adapter member, stressed by a high temperature and a gas force, moves to the pressure relief hole. Because not shielded by the insulator, the adapter member covers the pressure relief hole and is deformed at a position corresponding to the pressure relief hole. A part of the deformed adapter member extends into the pressure relief hole to clog the pressure relief hole, so that the pressure inside the battery cell can not be relieved in a timely and effective manner, resulting in the explosion and fire of the battery cell.

Based on the above reasons, to solve the problem that the adapter plate is prone to deformation that shields the pressure relief hole, resulting in the poor safety performance of the battery cell, the inventor, after research, designed a battery cell. A gap control portion is disposed in a housing of the battery cell. The gap control portion is able to restrict the adapter member from shielding the pressure relief hole formed by the pressure relief mechanism in the event of the thermal runaway of the battery cell.

In the event of the thermal runaway of the battery cell, the pressure relief mechanism relieves the pressure inside the battery cell. The high temperature and high pressure gas flows toward the pressure relief mechanism. The adapter member, influenced by the temperature and force of the high temperature and high pressure gas, is easy to be deformed. The gap control portion is able to effectively limit the deformation or limit the moved adapter member from shielding the pressure relief hole, to avoid the problem that the battery cell can not smoothly discharge the gas and relieve the pressure because the adapter member shields the pressure relief hole, thereby reducing risks of the battery cell for catching a fire and exploding due to poor pressure relief in the event of thermal runaway of the battery cell, and effectively improving the safety performance of the battery cell.

The battery cell disclosed in the embodiments of the present application can, but is not limited to, be used in an electrical device, such as a vehicle, a ship, an aircraft. A power supply system for the electrical device can be formed using a battery cell, a battery, or the like disclosed in the present application.

Embodiments of the present application further provide an electrical device using a battery as a power supply. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, or the like. The spacecraft may include an airplane, a rocket, a space shuttle, a spaceship, or the like.

The battery described in the embodiments of the present application is not limited to being applicable to the electrical device described above, but can also be applicable to all electrical devices using the battery. However, for the sake of simplicity of description, the following embodiments are illustrated by taking an electrical device of one embodiment of the present application as a vehicle as an example.

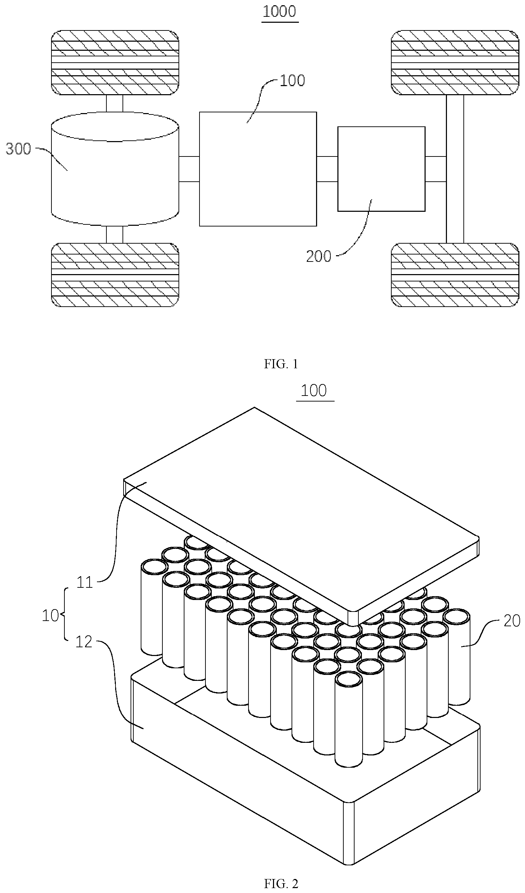

Referring to FIG. 1, FIG. 1 is a schematic structural diagram of a vehicle 1000 according to some embodiments of the present application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet the working power requirements of the vehicle 1000 in start, navigation and running.

In some other embodiments, the battery 100 can not only serve as an operating power source for the vehicle 1000, but also serve as a driving power source for the vehicle 1000, which replaces or partially replaces a fuel oil or a natural gas to provide a driving power for the vehicle 1000.

Referring to FIG. 2, FIG. 2 shows an exploded view of the battery 100 provided by some embodiments of the present application. The battery 100 can include a box body 10 and a battery cell 20. The battery cell 20 is accommodated within the box body 10. The box body 10 is configured to provide an accommodating space for the battery cell 20. The box body 10 can have a plurality of structures. In some embodiments, the box body 10 can include a first portion 11 and a second portion 12. The first portion 11 and the second portion 12 are capped with each other. The first portion 11 and the second portion 12 together define an accommodating space for accommodating the battery cell 20. The second portion 12 can be a hollow structure with an opening at one end. The first portion 11 can be a plate-shaped structure. The first portion 11 is capped on the opening side of the second portion 12 so that the first portion 11 and the second portion 12 together define the accommodating space. The first portion 11 and the second portion 12 can also be hollow structures both with an opening at the side. The opening side of the first portion 11 is capped on the opening side of the second portion 12. Of course, the box body 10 formed by the first portion 11 and the second portion 12 can be of a plurality of shapes, such as, a cuboid, a cube, and the like.

In the battery 100, the battery cell 20 can be plural in number. The plurality of battery cells 20 can be connected to each other in series or in parallel, or in series and in parallel. The connection in series and in parallel indicates that the plurality of battery cells 20 are connected both in series and in parallel. The plurality of battery cells 20 can be directly connected in series or in parallel, or in series and in parallel.

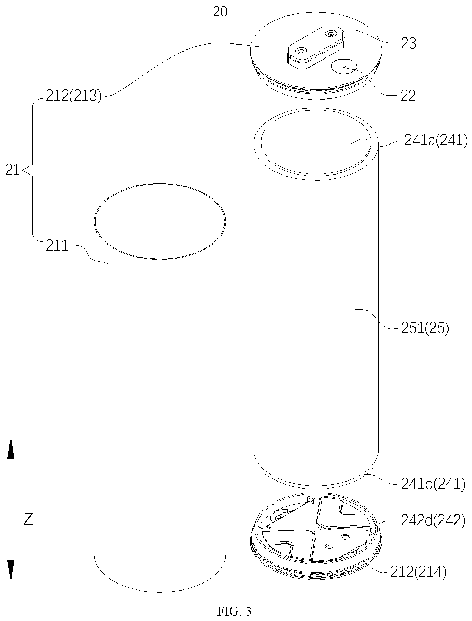

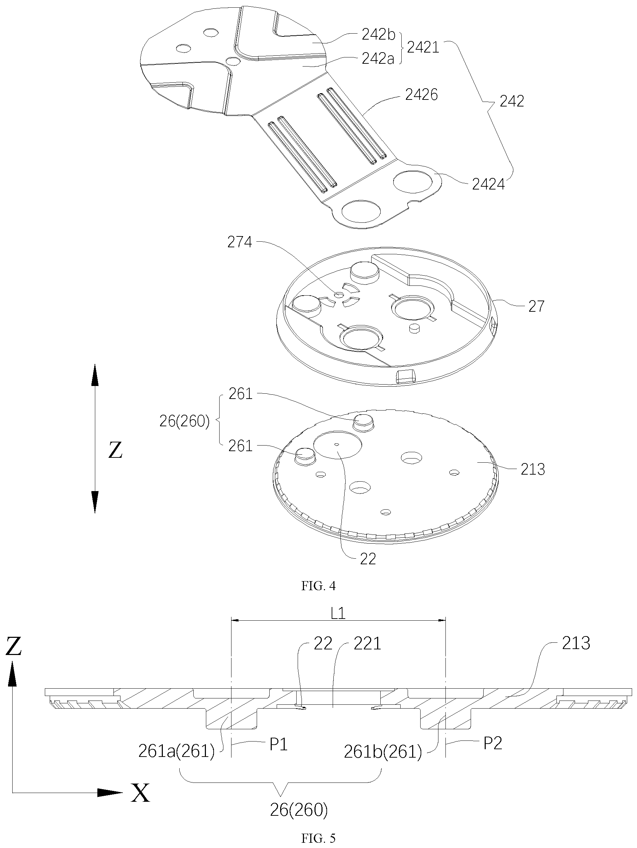

Referring to FIGS. 3 to 5, FIG. 3 shows an exploded view of the battery cell provided by some embodiments of the present application. FIG. 4 shows an exploded view of a first wall, the adapter member, and the insulator of the battery cell provided by some embodiments of the present application. FIG. 5 shows a sectional view of the first wall and the support member in the event of the thermal runaway of the battery cell provided by some embodiments of the present application.

The battery cell 20 provided by some embodiments of the present application can include a shell 21, an electrode assembly 25, a pressure relief mechanism 22, an electrode lead-out portion 23, an adapter member 242, and a gap control portion 260. The shell 21 has a first wall 213. The first wall 213 is provided with the pressure relief mechanism 22. The electrode lead-out portion 23 is disposed in the shell 21. The electrode assembly 25 is disposed in the shell 21. The electrode assembly 25 is provided with the tab 241. The adapter member 242 connects the electrode lead-out portion 23 to the tab 241. The gap control portion 260 is disposed within the shell 21. The gap control portion 260 is configured to be able to restrict the adapter member 242 from shielding the pressure relief hole 221 formed by the pressure relief mechanism 22 in the event of the thermal runaway of the battery cell 20.

The battery cell 20 can include the plurality of pressure relief mechanisms 22. One pressure relief mechanism 22 can be disposed at the first wall 213. The additional pressure relief mechanism 22 can be disposed on the wall of the shell 21 other than the first wall.

When the pressure relief mechanism 22 is disposed separately from the shell 21, the shell 21 can be provided with a through hole. The pressure relief mechanism 22 closes the through hole. When the pressure relief mechanism 22 is disposed integrally with the shell 21, the pressure relief mechanism 22 can be a thickness reduction zone of the shell 21. The thickness reduction zone can be an indentation in the shell.

For the battery cell 20 according to embodiments of the present application, the gap control portion 260 is disposed in the shell 21. In the event of the thermal runaway of the battery cell 20, a high-temperature and high-pressure gas generated in the shell is ejected and pushed toward the pressure relief mechanism 22 so that the pressure relief mechanism 22 performs an action or is destroyed to form a pressure relief hole 221 for the relief of an internal pressure or a temperature. However, when heated and stressed, the adapter member 242 disposed in the shell 21 is easy to be deformed to shield the pressure relief hole 221 of the pressure relief mechanism 22. The gap control portion 260 of the present application disposed in the shell 21 is able to effectively restrict the deformed or moved adapter member 242 from shielding the pressure relief hole 221, thereby reducing a risk of the battery cell 20 not being able to smoothly discharge a gas and relieve a pressure because the adapter member 242 shields the pressure relief hole 221, thus reducing a risk of the battery cell 20 for catching a fire or exploding due to poor pressure relief in the event of the thermal runaway of the battery cell 20, and effectively improving the safety of the battery cell 20.

The shell 21 is a component for accommodating the electrode assembly 25. The shell 21 can be of various shapes, e.g., a cylinder, a cuboid, or the like. The shell 21 can include a housing 211 and a cover body 212. The cover body 212 is capped on an opening of the housing 211. The cover body 212 and the housing 211 together define a sealed space.

The housing 211 can be a hollow structure with an opening formed at one end. The housing 211 can also be a hollow structure with openings formed at opposite ends. The housing 211 can be made of a plurality of materials, for example, copper, iron, aluminum, steel, aluminum alloy, or the like.

The cover body 212 is a component that closes the opening of the housing 211 to isolate an internal environment of the battery cell 20 from an external environment. The cover body 212 and the housing 211 together define the sealed space for accommodating the electrode assembly 25, the electrolyte solution, and other components. The cover body 212 can be connected to the housing 211 by welding or coil sealing to close the opening of the housing 211. The cover body 212 can have a shape adapted to that of the shell 21, for example, the housing 211 is a cuboid structure, and the cover body 212 is a rectangular plate structure adapted to the shell 21, or, for example, the housing 211 is a cylinder, and the cover body 212 is a circular plate structure adapted to the housing 211. The cover body 212 can also be made of a plurality of materials, for example, copper, iron, aluminum, steel, aluminum alloy, or the like.

In the battery cell 20, the one or two cover bodies 212 can be disposed. In an embodiment in which the housing 211 is a hollow structure with openings formed at two ends, the two cover bodies 212 can be correspondingly disposed. The two cover bodies 212 close the two openings of the housing 211, respectively. The two cover bodies 212 and the housing 211 together define the sealed space. In an embodiment in which the housing 211 is a hollow structure with an opening at one end. One cover body 212 can be disposed correspondingly. The cover body 212 closes the opening at the end of the housing 211. One cover body 212 and the housing 211 together define the sealed space.

In some embodiments, the first wall 213 can be the cover body 212. Of course, the first wall 213 can also be other side wall of the housing 211.

The electrode assembly 25 is a component in which an electrochemical reaction occurs in the battery cell 20. The electrode assembly 25 can include the positive electrode plate, the negative electrode plate, and the separator. The electrode assembly 25 can be a coiled structure formed by winding the positive electrode plate, the separator, and the negative electrode plate. Of course, the electrode assembly 25 can also be a laminated structure.

The pressure relief mechanism 22 is an element or component that relieves a pressure or a temperature inside the battery cell 20. The pressure relief mechanism 22 can take the form of, for example, an explosion-proof valve, an air valve, a pressure relief valve, a safety valve or an indentation disposed in the shell 21. Further, the pressure relief mechanism can specifically adopt a pressure-sensitive or temperature-sensitive element or construction, i.e., when the pressure or temperature inside the battery cell 20 reaches a threshold value, the pressure relief mechanism 22 performs an action or a weak structure disposed in the pressure relief mechanism 22 is broken, thereby forming the pressure relief hole 221 in which the pressure or temperature inside the battery cell can be relieved.

The pressure relief hole 221 is a hole formed in the shell 21 that communicates the interior of the battery cell with exterior of the battery cell in the event of the thermal runaway of the battery cell. The pressure relief hole can be formed by the actuation of the pressure relief mechanism. At least a part of the pressure relief mechanism is disrupted to form the pressure relief hole 221 when the pressure inside the battery cell 20 exceeds the threshold value.

The actions performed by the pressure relief mechanism 22 may include, but are not limited to rupturing, shattering, tearing, or bursting open at least a part of the pressure relief mechanism 22, or the like.

As shown in FIG. 3, when the first wall 213 is the cover body 212, the pressure relief mechanism 22 can be disposed on the cover body 212.

According to some embodiments of the present application, the gap control portion 260 includes the support member 26. The support member 26 is disposed between the first wall 213 and the adapter member 242. The support member 26 is configured to be able to restrict the adapter member 242 from shielding the pressure relief hole 221 formed by the pressure relief mechanism 22 in the event of the thermal runaway of the battery cell 20.

In some embodiments, the adapter member 242 includes a first connecting section. The first connecting section is configured to be connected to the tab of the electrode assembly. The support member 26 is disposed between the first wall 213 and the first connecting section.

The support member 26 is disposed between the first wall 213 and the adapter member 242, and is able to form a support between the first wall 213 and the adapter member 242 in the event of the thermal runaway of the battery cell 20, which is conducive to restricting the adapter member 242 from shielding the pressure relief hole 221. Therefore, the battery cell 20 is able to relieve the pressure in a timely manner.

According to some embodiments of the present application, the support member 26 has a melting point higher than 200°C.

The support member 26 can be made of metal, a ceramic material, or the like with a high melting point. The support member 26 can have a melting point higher than 300 °C, 400 °C, 500 °C, or the like, or higher than 600 °C or even higher. The higher the melting point of the support member 26 is, the better the structural stability of the support member 26 under a high temperature and high pressure environment is. The support member 26 with a high melting point can effectively ensure the functional stability of the support member 26 in the event of the thermal runaway of the battery cell 20. According to some embodiments of the present application, the support member 26 is a metal member.

The support member 26 can be made of copper, iron, aluminum, aluminum alloy, or the like. In an implementation form in which the support member 26 is disposed at the first wall 213, the support member 26 can be made of the same material as the first wall 213, so that the support member 26 is able to be welded to or integrally molded with the first wall 213. Of course, the materials of the support member 26, the first wall 213, and the adapter member 242 can also be different. Exemplarily, the support member 26 can be made of metal with a melting point higher than 200°C.

The support member 26 made of metal is easy to achieve higher structural strength, thereby effectively ensuring the shielding and limiting effects of the support member 26 on the adapter member 242. In addition, the support member 26 made of metal is easy to be fixed inside the shell 21, which is conducive to the production and manufacturing of the battery cell 20.

According to some embodiments of the present application, the support member 26 is fixed to the first wall 213.

Specifically, the first wall 213 includes an inner surface facing the electrode assembly 25. The support member 26 is fixed to the inner surface of the first wall 213 and protrudes from the inner surface. The support member 26 fixed to the first wall 213 includes a plurality of implementation forms, for example, the support member 26 can be integrally molded with the first wall 213. The support member 26 can also be disposed separately from the first wall 213 and fixedly connected to the first wall 213 by welding, gluing, snap-fitting, fastener locking, or the like. The support member 26 can be made of the same material as the first wall 213, so that the support member 26 is welded to or integrally molded with the first wall 213. The support member 26 can also be made of a material different from that of the first wall 213, for example, the first wall 213 can be made of aluminum, stainless steel, or aluminum alloy. The support member 26 can be made of ceramic.

The support member 26 is fixed to the first wall 213, which is conducive to ensuring the connection stability of the support member 26, hence ensures the stress stability of the support member 26, and is conducive to giving full play to the restrictive effect of the support member 26 on the adapter member 242. According to some embodiments of the present application, the support member 26 and the first wall 213 are integrally molded.

The support member 26 can be made of the same material as the first wall 213. The support member 26 and the first wall 213 can be integrally molded by forging, casting, stamping, or the like.

The support member 26 and the first wall 213 are integrally molded, which effectively ensures the structural strength of the support member 26 while being conducive to the manufacturing and assembly of the battery cell 20. According to some embodiments of the present application, the support member 26 is disposed around the pressure relief mechanism 22.

As previously mentioned, the support member 26 can be annular and disposed around the pressure relief mechanism 22. The end of the annular support member 26 is fixedly connected to the first wall 213, and the other end thereof faces the adapter member 242. A channel for communicating an internal space of the annular support member 26 with an external space of the annular support member 26 is disposed on the side wall of the annular support member 26. When the adapter member 242 is deformed and abutted against the end of the annular support member 26, the channel at the side wall of the support member 26 is able to effectively ensure that the gas enters the internal space of the annular support member 26 smoothly and is discharged through the pressure relief mechanism 22. It is appreciated that the annular support member 26 can be circular, ovally annular, rectangularly frame-shaped, or the like.

Of course, the support member 26 can also include a plurality of split structures disposed around the pressure relief mechanism 22. The plurality of split structures are spaced apart from each other and disposed around the pressure relief mechanism 22. A channel that is able to communicate the pressure relief mechanism 22 with the exterior of the support member 26 is formed between the two adjacent split structures. The channel is able to effectively ensure that the gas is discharged smoothly through the pressure relief mechanism 22 when the adapter member 242 is deformed and abutted against a part of or all of the split structures.

The support member 26 is disposed around the pressure relief mechanism 22 to form a stable support around the pressure relief mechanism 22, thereby further improving the stability of the support member 26 in supporting and limiting the adapter member 242.

Referring to FIG. 4, and further referring to FIG. 5, FIG. 5 shows a front view of the first wall and the support member provided by some embodiments of the present application. According to some embodiments of the present application, the support member 26 includes a first sub-support member 261a and a second sub-support member 261b. The pressure relief mechanism 22 is disposed between the first sub-support member 261a and the second sub-support member 261b.

A thickness direction of the first wall 213 is parallel to a Z direction in the figure.

When viewed in the thickness direction of the first wall 213, the pressure relief mechanism 22 is disposed between projections of the first sub-support member 261a and the second sub-support member 261b on the first wall 213. The pressure relief mechanism 22 is spatially staggeredly disposed with the first sub-support member 261a and the second sub-support member 261b, e.g., in the thickness direction of the first wall 213, the pressure relief mechanism 22 can be disposed with the first sub-support member 261a and the second sub-support member 261b in a layered manner.

The pressure relief mechanism 22 is disposed between the first sub-support member 261a and the second sub-support member 261b, which is conducive to the support of the adapter member 242 at two positions, thereby further ensuring the stop effect of the support member 26.

According to some embodiments of the present application, please refer to FIG. 4 and further refer to FIG. 5, FIG. 5 shows a front view of the first wall and the support member provided by some embodiments of the present application. The support member 26 includes the plurality of sub-support members 261. The plurality of sub-support members 261 are disposed around the pressure relief mechanism 22.

Each of the sub-support members 261 can be in a cylinder structure, a hexahedral structure, a cone structure, an arcuate protrusion 243b structure, or the like. The plurality of sub-support members 261 can be spaced apart from each other and disposed around the pressure relief mechanism 22. The end of the sub-support member 261 is integrally molded with or fixedly connected to the first wall 213, and the other end thereof opposite to the first wall 213 faces the adapter member 242. In addition, the end of the sub-support member 261 facing the adapter member 242 can have a bending section. The bending section can be disposed opposite to the first wall 213. A projection of the bending section on the first wall 213 can or can not fall into the pressure relief mechanism 22. The bending section can effectively increase the contact area between the adapter member 242 and the support member 26, thereby further improving the blocking and limiting effects of the support member 26 on the adapter member 242.

It is to be understood that the support member 26 can include two, three, four or even more sub-support members 261. Exemplarily, the support member 26 includes the two sub-support members 261. The two sub-support members 261 are fixed to the first wall 213 and positioned on the opposite sides of the pressure relief mechanism 22.

The support member 26 includes the plurality of sub-support members 261. The plurality of sub-support members 261 are disposed around the pressure relief mechanism 22. The plurality of sub-support members 261 are able to support the adapter member 242 from a plurality of positions. An exhaust channel that is communicated with the pressure relief mechanism 22 can be formed between the two adjacent sub-support members 261 so that the high-temperature and high-pressure gas passes through the exhaust channel and is discharged through the pressure relief mechanism 22. A structure thereof is simple and practical.

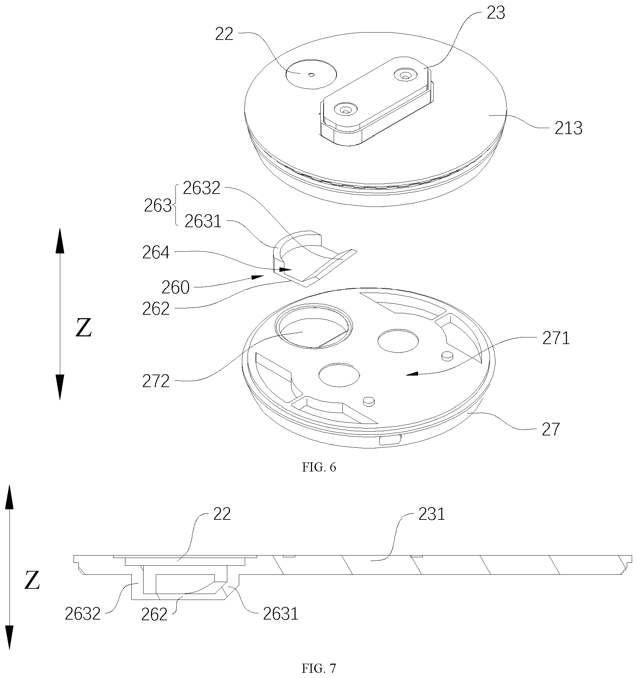

According to yet some embodiments of the present application, please refer to FIG. 6 and FIG. 7, FIG. 6 shows an exploded view of the first wall, the insulator and the support member of the battery cell provided by yet some embodiments of the present application. FIG. 7 shows a sectional view of the first wall and the support member provided by yet some embodiments of the present application. The support member 26 covers on and is disposed at the pressure relief mechanism 22. The support member 26 has a second exhaust channel 264 for communicating an internal space of the support member 26 with an external space of the support member 26.

Specifically, the support member 26 can be of a cover-body-like structure. The opening of the cover body faces the first wall 213 and is fixedly connected to the first wall 213 to cover the pressure relief mechanism 22 within the support member 26. It will be appreciated that the pressure relief mechanism 22 can be fully covered within the support member 26 or partially covered within the support member 26.

The support member 26 can be in a form of a mesh or porous cover-body structure. Mesh holes on the support member 26 form the above second exhaust channel 264. The support member 26 can be a hemispherical shape, a cylinder shape with an opening at one end, or the like. Of course, the support member 26 can also include a support wall disposed opposite to the pressure relief mechanism 22, and a side wall for connecting the support wall to the first wall 213. The support wall is configured to be abutted against the deformed adapter member 242. The second exhaust channel 264 can be disposed at the side wall.

The support member 26 covers on and is disposed at the pressure relief mechanism 22. The support member 26 plays a role in protecting the pressure relief mechanism like a shield, which can effectively ensure the structural strength of the support member 26 itself, thereby effectively ensuring the stress stability of the support member 26 on the one hand. On the other hand, the support member 26 covers on and is disposed at the pressure relief mechanism 22, which can fully restrict the adapter member 242 from shielding the pressure relief hole 221. The support member 26 is provided with the second exhaust channel 264 for communicating the internal space of the support member 26 with the external space of the support member 26. Therefore, it is ensured that in the event of the thermal runaway of the battery cell 20, the gas in the battery cell 20 is able to reach the pressure relief mechanism 22 through the second exhaust channel 264 smoothly, thereby ensuring that the pressure relief mechanism 22 relieves the pressure smoothly.

According to some embodiments of the present application, please continue to refer to FIGS. 6 and 7, the support member 26 includes a first bottom wall 262 and a first side wall 263. The first bottom wall 262 and the pressure relief mechanism 22 are disposed opposite to each other in the thickness direction of the first wall 213. A gap is formed between the first bottom wall 262 and the pressure relief mechanism 22. The first side wall 263 connects the first bottom wall 262 to the first wall 213. The second exhaust channel 264 is formed at the first side wall 263.

As shown in FIG. 7, the thickness direction of the first wall 213 extends in the Z direction. The first bottom wall 262 is spaced apart from the first wall 213 in the Z direction so that the gap is formed between the first bottom wall 262 and the pressure relief mechanism 22.

The first side wall 263 connects the first bottom wall 262 to the first wall 213. The second exhaust channel 264 is formed in the first side wall 263. The first side wall 263 and the first channel have a plurality of implementation forms, for example, the first side wall 263 can be a circular structure that is not completely closed. The first side wall 263 is disposed around the pressure relief mechanism 22 and disposed around the first bottom wall 262. The opening of the first side wall 263 forms the second exhaust channel 264.

Alternatively, the first side wall 263 can be in a shape of a completely closed ring. One or more through holes are disposed at the wall of the first side wall 263. The through hole forms the second exhaust channel 264.

Of course, the first side wall 263 can also include a plurality of sub-side walls. The plurality of sub-side walls are spaced apart around the pressure relief mechanism 22. The second exhaust channel 264 is formed between the two adjacent sub-side walls.

Exemplarily, as shown in FIG. 6, the first side wall 263 includes a first sub-side wall 2631 and a second sub-side wall 2632. The first sub-side wall 2631 is an arc-shaped wall that extends axially in the Z direction. The second sub-side wall 2632 is inclined and disposed relative to the first bottom wall 262. The first sub-side wall 2631 and the second sub-side wall 2632 are spaced apart and located on the opposite sides of the first bottom wall 262. The second exhaust channel 264 is formed between the first sub-side wall 2631 and the second sub-side wall 2632.

The first bottom wall 262 is disposed opposite to the first wall 213 so that the gap is formed between the first bottom wall 262 and the pressure relief mechanism 22. The first bottom wall 262 is oriented toward the electrode assembly 25 to restrict the adapter member 242 from being close to the pressure relief mechanism 22 and then restrict the adapter member 242 from shielding the pressure relief hole 221. In addition, the second exhaust channel 264 is formed in the first side wall 263, which can effectively reduce a risk of the second exhaust channel 264 being shielded by the adapter member 242, and effectively ensures the smoothness of the pressure relief of the pressure relief mechanism 22.

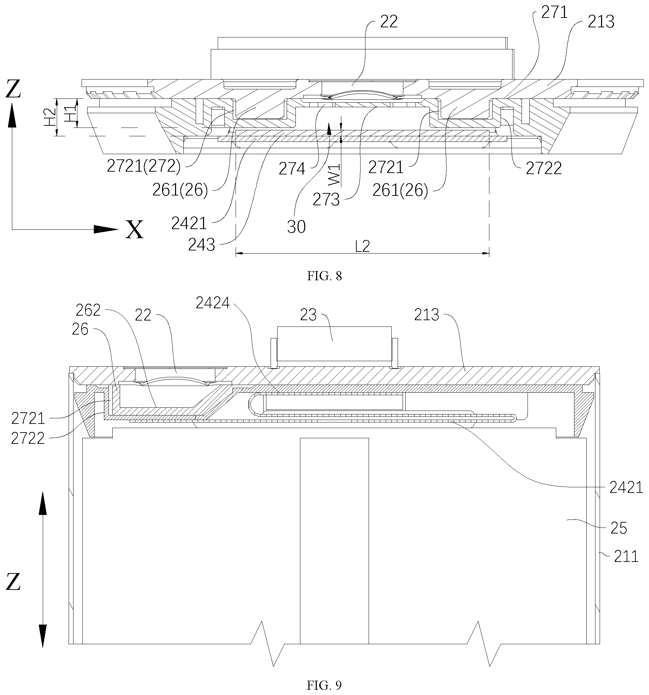

According to some embodiments of the present application, please refer again to FIGS. 4 to 6, and further refer to FIGS. 8 and 9, FIG. 8 shows a sectional view of the cooperating relationship between the insulator and the support member provided by some embodiments of the present application. FIG. 9 shows a sectional view of the cooperating relationship between the insulator and the support member provided by further some embodiments of the present application.

The battery cell 20 further includes the insulator 27. The insulator 27 is positioned between the first wall 213 and the adapter member 242. The insulator 27 is configured to insulate and isolate the first wall 213 from the adapter member 242. The support member 26 has a melting point higher than that of the insulator 27. The support member 26 is configured to prevent the adapter member 242 from shielding the pressure relief hole formed by pressure relief mechanism 22 in the event of the thermal runaway of the battery cell 20 after the insulator 27 is melted.

The insulator 27 can be made of plastic, for example, PP (polypropylene), PE (polyethylene), or the like, which is conducive to reducing the weight of the battery cell 20 while ensuring an insulating effect.

The insulator 27 is at least partially disposed between the first wall 213 and the adapter member 242. That is, a part of the structure of the insulator 27 is located between the first wall 213 and the adapter member 242, or a whole structure of the insulator 27 is located between the first wall 213 and the adapter member 242.

Generally, a through hole 274 is disposed at the position of the insulator 27 corresponding to the pressure relief mechanism 22, so that the gas inside the battery cell 20 reaches the pressure relief mechanism 22 smoothly. However, in the event of the thermal runaway of the battery cell 20, the temperature and pressure inside the battery cell 20 are relatively high, and melts the insulator 27. In addition, the adapter member 242 is partially deformed and shields the pressure relief hole 221, thereby preventing the gas inside the battery cell 20 from flowing toward the pressure relief hole 221.

After the support member 26 is disposed, when the battery cell 20 is in a normal state, the insulator 27 insulates and isolates the first wall 213 from the adapter member 242. In the event of the thermal runaway of the battery cell 20, the insulator 27 is susceptible to being melted at a high temperature. At this time, the support member 26 is able to be supported between the adapter member 242 and the first wall 213, so that a channel that allows the gas to pass through is formed between the adapter member 242 and the first wall 213. Therefore, the gas inside the battery cell 20 is able to pass through the channel and be discharged from the battery cell 20 via the pressure relief mechanism 22, thereby preventing the deformed or displaced adapter member 242 from shielding the pressure relief hole 221 of the pressure relief mechanism 22.

The insulator 27 is configured to insulate and isolate the first wall 213 from the adapter member 242 so as to avoid short-circuiting caused by the contact between the first wall 213 and the adapter member 242. The support member 26 has the melting point higher than that of the insulator 27. Therefore, the insulator 27 is melted and the support member 26 is less likely to be melted in the event of the thermal runaway of the battery cell 20, which is conducive to preventing the adapter member 242 from shielding the pressure relief hole.

According to some embodiments of the present application, the insulator 27 includes a third surface 271 facing the first wall 213. A first groove 272 is formed on the third surface 271. At least a part of the support member 26 is accommodated within the first groove 272.

The first groove 272 is disposed to avoid the support member 26 excessively occupying a space inside the battery cell 20 while ensuring the insulating effect of the first wall 213 and the adapter member 242, thereby effectively ensuring the energy density of the battery cell 20.

As previously mentioned, the insulator 27 can be made of plastic, for example, PP (polypropylene), PE (polyethylene), or the like, which is conducive to reducing the weight of the battery cell 20 while ensuring the insulating effect.

As previously described, the through hole 274 is generally disposed at the position of the insulator 27 corresponding to the pressure relief mechanism 22. The through hole 274 allows the gas inside the battery cell 20 to be able to reach the pressure relief mechanism 22 smoothly.

The first groove 272 is disposed at the part on the insulator 27 for avoiding the support member 26. The first groove 272 is a recessed zone formed by recessing the third surface 271 in a direction away from the first wall 213.

The setting position and the setting form of the first groove 272 can correspond to the support member 26, for example, as shown in FIG. 8, based on the implementation form of "The support member 26 is fixed to the first wall 213. The support member 26 includes the plurality of sub-support members 261. The plurality of sub-support members 261 are disposed around the pressure relief mechanism 22", the first groove 272 can also include a plurality of sub-grooves 2721. In the thickness direction (the Z direction shown in the figure) of the first wall 213, the plurality of sub-grooves 2721 correspond to the plurality of sub-support members 261. The end of each of the sub-support members 261 away from the first wall 213 extends into the sub-groove 2721 corresponding to the sub-support member 261.

In yet some embodiments, as shown in FIG. 9, based on the implementation form of "the support member 26 includes the first bottom wall 262 and the first side wall 263. The first bottom wall 262 and the pressure relief mechanism 22 are disposed opposite to each other in the thickness direction of the first wall 213. The gap is formed between the first bottom wall 262 and the pressure relief mechanism 22. The first side wall 263 connects the first bottom wall 262 to the first wall 213. The second exhaust channel 264 is formed at the first side wall 263.", the first groove 272 corresponds to the support member 26. The inner surface of the first groove 272 can correspond to the outer surface of the support member 26. The first bottom wall 262 extends completely into the first groove 272. At least a part of the first side wall 263 extends into the first groove 272.

In some other embodiments, as shown in FIG. 8, the insulator 27 further includes a fourth surface 273 opposite to the third surface 271 in the thickness direction (the Z direction shown in the figure) of the first wall 213, i.e., the fourth surface 273 is oriented toward the electrode assembly 25. A protruding portion 2722 is formed at a position on the fourth surface 273 corresponding to the first groove 272, which is designed in such a way that the structure of the insulator 27 beyond the first groove 272 can be effectively thinned, thereby effectively reducing a space occupied by the insulator 27, reducing the weight of the insulator 27, and achieving the objective of saving the material of the insulator 27.

The insulator 27 is configured to insulate and isolate the first wall 213 from the adapter member 242 to avoid short-circuiting caused by the contact between the first wall 213 and the adapter member 242. The first groove 272 is disposed to avoid the support member 26 and the insulator 27 excessively occupying the space inside the battery cell 20 while ensuring the insulating effect of the first wall 213 and the adapter member 242, thereby effectively ensuring the energy density of the battery cell 20.

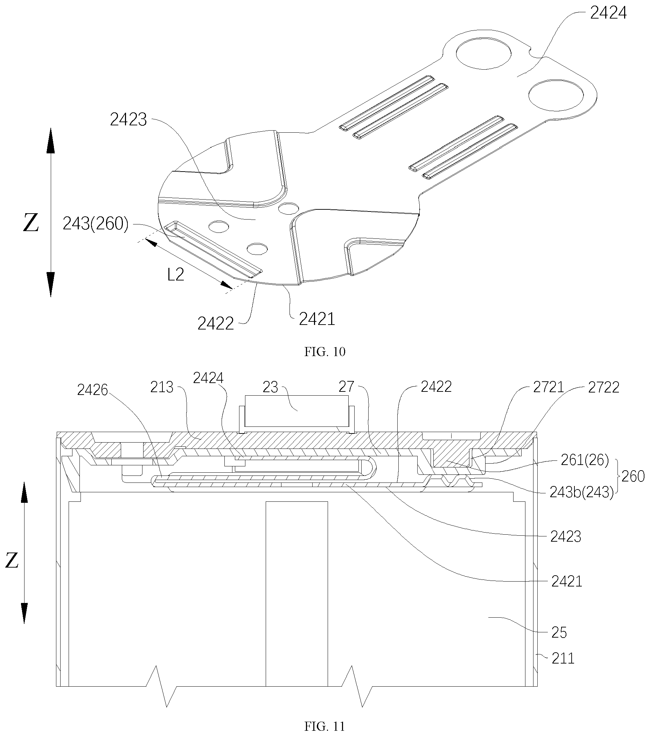

According to some embodiments of the present application, please refer to FIGS. 10 and 11, the gap control portion 260 includes a reinforcing portion 243. The reinforcing portion 243 is disposed at the adapter member 242. A projection of the reinforcing portion 243 on the first wall 213 in the thickness direction of the first wall 213 covers at least a part of the pressure relief mechanism 22.

The one or more reinforcing portions 243 can be disposed.

In the above solution, the reinforcing portion 243 is able to increase the strength of the adapter member 242. Because the projection of the reinforcing portion 243 on the first wall 213 covers at least a part of the pressure relief mechanism 22, it is more difficult for the adapter member 242 to be deformed in the event of the thermal runaway of the battery cell 20, which reduces a risk of the adapter member 242 for shielding the pressure relief hole in the event of the thermal runaway of the battery cell 20.

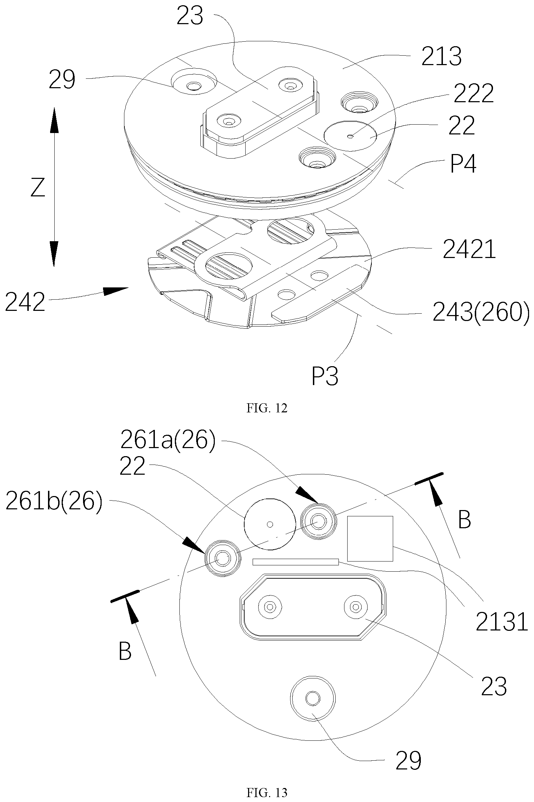

Please refer to FIGS. 12 to 14, according to some embodiments of the present application, the gap control portion 260 includes the reinforcing portion 243. The adapter member 242 includes a first connecting section 2421. The first connecting section 2421 is configured to be connected to the tab 241 (see FIG. 3). The reinforcing portion 243 is disposed at the first connecting section 2421.

The first connecting section 2421 is the part of the adapter member 242 for being connected to the tab 241. The reinforcing portion 243 is disposed at the first connecting section 2421, which is able to increase the strength of the part of the adapter member 242 connected to the tab 241.

The adapter member 242 can include the first connecting section 2421 connected to the tab 241, a second connecting section 2424 connected to the electrode lead-out portion, and a third connecting section 2426 for connecting the first connecting section 2421 to the second connecting section 2424. The first connecting section 2421 is bent relative to the third connecting section 2426. The second connecting section 2424 is bent relative to the third connecting section 2426.

The reinforcing portion 243 is disposed at the first connecting section 2421, so that the strength of the first connecting section 2421 is reinforced, which is able to reduce the difficulty of the first connecting section 2421 to be deformed by a high-pressure gas impact in the event of the thermal runaway of the battery cell 20, reduces the deformation amount of the first connecting section 2421, and thus reduces the risk of the adapter member 242 for shielding the pressure relief hole 221 formed by the pressure relief mechanism 22.

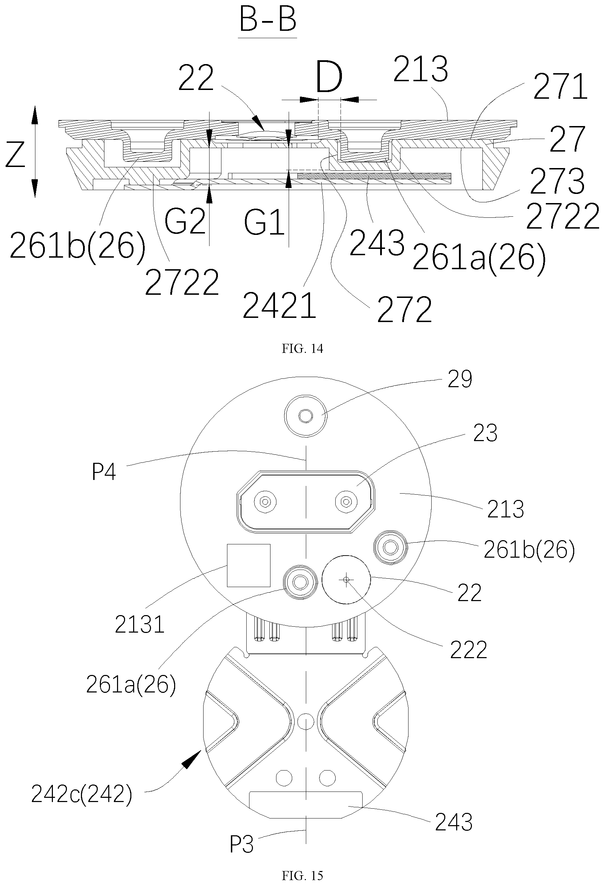

Please refer to FIG. 14, according to some embodiments of the present application, in the thickness direction Z of the first wall 213, the projection of the reinforcing portion 243 on the first wall 213 at least covers a part of the pressure relief mechanism 22.

Because the projection of the reinforcing portion 243 on the first wall 213 covers at least a part of the pressure relief mechanism 22, it is more difficult for the adapter member 242 to be deformed in the event of the thermal runaway of the battery cell 20, which reduces the risk of the adapter member 242 for shielding the pressure relief hole in the event of the thermal runaway of the battery cell 20.

In an embodiment in which the reinforcing portion 243 is disposed at the first connecting section 2421, in some embodiments, the projection of the reinforcing portion 243 on the first wall 213 in the thickness direction of the first wall 213 can not be overlapped with the pressure relief mechanism 22.

In an embodiment in which the reinforcing portion 243 is disposed at the first connecting section 2421, in some embodiments, the projection of the reinforcing portion 243 on the first wall 213 in the thickness direction of the first wall 213 covers a part of or all of the pressure relief mechanism 22.

Please refer to FIGS. 5 and 8, according to some embodiments of the present application, the gap control portion 260 further includes the support member 26. The support member 26 is disposed between the first wall 213 and the reinforcing portion 243. When viewed in the thickness direction of the first wall 213, the support member 26 is at least partially overlapped with the reinforcing portion 243.

When viewed in the thickness direction of the first wall 213, the support member 26 and the reinforcing portion 243 can be partially overlapped, or, the support member 26 and the reinforcing portion 243 can be all overlapped, e.g., the support member 26 covers the entirety of the reinforcing portion 243, or the reinforcing portion 243 covers the entirety of the support member 26.

The support member 26 is at least partially overlapped with the reinforcing portion 243, so that the support member 26 is able to be abutted against between the first wall 213 and the reinforcing portion 243 in the event of the thermal runaway of the battery cell 20, which is able to prevent the adapter member 242 from being deformed toward the first wall 213. Therefore, the pressure relief channel 30 is formed between the reinforcing portion 243 and the first wall 213, so that the gas flows toward the pressure relief mechanism 22 via the pressure relief channel 30, thereby allowing the gas to be discharged via the pressure relief hole 221.

Please refer to FIGS. 5 and 8, and further refer to FIGS. 12 to 14, according to some embodiments of the present application, the gap control portion 260 further includes the support member 26. At least a part of the support member 26 is disposed between the first wall 213 and the reinforcing portion 243.

The support member 26 is configured to be abutted against between the first wall 213 and the reinforcing portion 243 in the event of the thermal runaway of the battery cell 20 to form the pressure relief channel 30 between the reinforcing portion 243 and the first wall 213.

The support member 26 can be one in number. One part of the one support member 26 is disposed between the first wall 213 and the reinforcing portion 243, and the other part of the one support member 26 is not disposed in correspondence to the reinforcing portion 243. The support member 26 can be plural in number. One part of the plurality of support members 26 is disposed between the first wall 213 and the reinforcing portion 243, and the other part of the support members 26 is not disposed in correspondence to the reinforcing portion 243.

The support member 26 is overlapped at least partially with the reinforcing portion 243, so that the support member 26 is able to be abutted against between the first wall 213 and the reinforcing portion 243 in the event of the thermal runaway of the battery cell 20, thereby forming the pressure relief channel 30 between the reinforcing portion 243 and the first wall 213, and being conducive to the flow of the gas toward the pressure relief mechanism 22 via the pressure relief channel 30, and being conducive to the pressure being relieved by the pressure relief mechanism 22.

Please refer to FIGS. 5 and 8, and further refer to FIGS. 12 to 14, according to some embodiments of the present application, the gap control portion 260 further includes the support member 26. The support member 26 is disposed between the first wall 213 and the reinforcing portion 243. The support member 26 is configured to be abutted against between the first wall 213 and the reinforcing portion 243 in the event of thermal runaway of the battery cell 20 to form the pressure relief channel 30 between the reinforcing portion 243 and the first wall 213.

In some embodiments, the support member 26 can also be referred to as a stopper.

The support member 26 serves as a component for playing a stop role.

The support member 26 is abutted against between the first wall 213 and the reinforcing portion 243 in the event of the thermal runaway of the battery cell 20, so that a gap is always formed between the reinforcing portion 243 and the first wall 213 in the thickness direction Z of the first wall 213 to form the pressure relief channel 30 for the flow of the gas from the pressure relief channel 30 toward the pressure relief mechanism 22. The pressure relief channel 30 can also be referred to as the exhaust channel for the flow of the gas.

In the above solution, the support member 26 is abutted against between the first wall 213 and the reinforcing portion 243 in the event of the thermal runaway of the battery cell 20, thereby forming the pressure relief channel 30 between the reinforcing portion 243 and the first wall 213, and being conducive to the flow of the gas toward the pressure relief mechanism 22 via the pressure relief channel 30, and being conducive to the pressure being relieved by the pressure relief mechanism 22.

According to some embodiments of the present application, as shown in FIGS. 5, 13, and 14, the support member 26 includes the first sub-support member 261a and the second sub-support member 261b. The pressure relief mechanism 22 is disposed between the first sub-support member 261a and the second sub-support member 261b.

In some embodiments, the first sub-support member 261a can also be referred to as a first sub-stopper. The second sub-support member 261b can also be referred to as a second sub-stopper.

The first sub-support member 261a and the second sub-support member 261b are two constituent parts of the support member 26. The first sub-support member 261a and the second sub-support member 261b are spaced apart.

The pressure relief mechanism 22 is disposed between the first sub-support member 261a and the second sub-support member 261b so that the reinforcing portion 243 is stopped at two positions, thereby further ensuring the stop effect of the support member 26.

According to some embodiments of the present application, in the thickness direction of the first wall 213, the projection of the reinforcing portion 243 on the first wall 213 covers at least a part of the first sub-support member 261a and/or at least a part of the second sub-support member 261b.

Please refer to FIG. 8, the projection of the reinforcing portion 243 on the first wall 213 can cover a part of the first sub-support member 261a and a part of the second sub-support member 261b, or, the projection of the reinforcing portion 243 on the first wall 213 can cover the entirety of the first sub-support member 261a and the entirety of the second sub-support member 261b.

In other words, in the thickness direction Z, the projection of the reinforcing portion 243 has a relatively large overlap area with the first sub-support member 261a and the second sub-support member 261b.

Alternatively, the projection of the reinforcing portion 243 on the first wall 213 can cover a part of the first sub-support member 261a or a part of the second sub-support member 261b; or, the projection of the reinforcing portion 243 on the first wall 213 can cover the entirety of the first sub-support member 261a or the entirety of the second sub-support member 261b. In other words, in the thickness direction, the projection of the reinforcing portion 243 has a relatively large overlap area with the first sub-support member 261a or the second sub-support member 261b. Optionally, as shown in FIG. 14, the projection of the reinforcing portion 243 covers the first sub-support member 261a in the thickness direction.

The reinforcing portion 243 has a relatively big strength. When the reinforcing portion 243 is abutted against the first sub-support member 261a and the second sub-support member 261b, the reinforcing portion 243 forms a simply supported beam with the first sub-support member 261a and the second sub-support member 261b, which reduces a risk of the deformation of the reinforcing portion 243 that shields and clogs the pressure relief hole.

When the projection of the reinforcing portion 243 covers at least a part of the first sub-support member 261a or at least a part of the second sub-support member 261b, at least a part of the first sub-support member 261a or at least a part of the second sub-support member 261b can block the adapter member 242 from being deformed toward the pressure relief mechanism 22, which increases the difficulty in the deformation of the adapter member 242, and reduces a risk of the deformation of the adapter member 242 that shields the pressure relief hole 221.

The simply-supported beam indicates that two ends of the beam rest on a base. The base restrains only the vertical displacement of the beam. In the present application, the first sub-support member 261a and the second sub-support member 261b can be considered as the bases. The reinforcing portion 243 can be considered as the beam.

According to some embodiments of the present application, a projection of the center of the first sub-support member 261a and/or the center of the second sub-support member 261b on the adapter member 242 falls into the reinforcing portion 243 in the thickness direction Z.

The center of the first sub-support member 261a and the center of the second sub-support member 261b are geometric centers of the first sub-support member 261a and the second sub-support member 261b, respectively.

Optionally, as shown in FIG. 14, the projection of the center of the first sub-support member 261a on the adapter member 242 falls into the reinforcing portion 243.

The projections of the center of the first sub-support member 261a and the center of the second sub-support member 261b on the adapter member 242 fall into the reinforcing portion 243, so that the reinforcing portion 243 has a relatively large overlap area with the first sub-support member 261a and the second sub-support member 261b. Therefore, the first sub-support member 261a and the second sub-support member 261b have a better shielding effect on the reinforcing portion 243 in the event of the thermal runaway of the battery cell 20, thereby reducing the risk of the deformation of the reinforcing portion 243 that shields or clogs the pressure relief hole 221. When the projection of the center of the first sub-support member 261a or the center of the second sub-support member 261b on the adapter member 242 falls into the reinforcing portion 243, the first sub-support member 261a or the second sub-support member 261b have a relatively large overlap area with the reinforcing portion 243. In the event of the thermal runaway of the battery cell 20, the first sub-support member 261a or the second sub-support member 261b has a better shielding effect on the reinforcing portion 243, which can reduce the risk of the deformation of the reinforcing portion 243 that shields or clogs the pressure relief hole 221.

According to some embodiments of the present application, as shown in FIG. 14, the distance D between a projection of the support member 26 on the first wall 213 in the thickness direction z and the pressure relief mechanism 22 is disclosed, where 1 mm ≤ D ≤ 20 mm.

Optionally, D can be 1mm, 2mm, 3mm, ..., 9mm, 10mm, 11mm, ..., 19mm or 20mm.

When the pressure relief mechanism 22 is disposed separately from the first wall 213, the first wall 213 is provided with the through hole. The pressure relief mechanism 22 closes the through hole. When the one support member 26 is disclosed, D is the shortest distance between the support member 26 and the pressure relief mechanism 22. When the support member 26 is plural in number, the shortest distance between the one support member 26 closest to the through hole and the pressure relief mechanism 22 is 1 mm ≤ D ≤ 20 mm.

When the pressure relief mechanism 22 is integrally disposed with the first wall 213, for example, the pressure relief mechanism 22 is the thickness reduction zone on the first wall 213, such as the indentation on the first wall 213. When the support member 26 is one in number, D is the shortest distance between the support member 26 and the indentation. When the support members 26 is plural in number, the shortest distance between the one support member 26 closest to the indentation and the indentation is 1 mm ≤ D ≤ 20 mm.

In some embodiments, when the distance between the first sub-support member 261a and the pressure relief mechanism 22 is less than the distance between the second sub-support member 261b and the pressure relief mechanism 22, D can be the distance between a projection of the first sub-support member 261a on the first wall 213 in the thickness direction of the first wall 213 and the pressure relief mechanism 22.

The distance D between the projection of the support member 26 on the first wall 213 in the thickness direction and the pressure relief mechanism 22 meets the above range, which, on the one hand, is conducive to processing and manufacturing and on the other hand, has a better stop effect on the adapter member 242 and reduces the risk of the deformation of the adapter member 242 that shields and clogs the pressure relief hole 221 in the event of the thermal runaway of the battery cell 20. If the distance D between the projection of the support member 26 on the first wall 213 in the thickness direction and the pressure relief mechanism 22 is relatively small (e.g., less than 1 mm). The cooperation between the support member 26 and the first wall 213 tends to interfere with the pressure relief mechanism 22, so that the processing is more difficult. If the distance D between the projection of the support member 26 on the first wall 213 in the thickness direction and the pressure relief mechanism 22 is relatively large (e.g., greater than 20 mm), and the support member 26 does not have a significant support effect on the adapter member 242, the zone of the adapter member 242 corresponding to the pressure relief mechanism 22 can be deformed in the event of the thermal runaway of the battery cell 20 to shield and clog the pressure relief hole 221.

According to some embodiments of the present application, 2mm ≤ D ≤ 5mm.

Optionally, D can be 2mm, 2.5mm, 3mm, 3.5mm, 4mm, 4.5mm, or 5mm.

Compared to D < 2mm, when D ≥ 2mm, the difficulty in the processing and manufacturing is lower. Compared to D > 5mm, when D ≤ 5mm, the support member 26 has a better stop effect on the adapter member 242, which effectively reduces the risk of the deformation of the adapter member 242 that shields and clogs the pressure relief hole 221 in the event of the thermal runaway of the battery cell 20.

Please refer to FIGS. 12 and 15, according to some embodiments of the present application, in an unfolded state of the adapter member 242, a positive projection of the central axis P3 of the adapter member 242 in a width direction thereof on the first wall 213 does not pass through the center 222 of the pressure relief mechanism 22, or, the first wall 213 is provided with the electrode lead-out portion 23. A positive projection of the extension line of the central axis P4 of the electrode lead-out portion 23 in a width direction thereof on the first wall 213 does not pass through the center 222 of the pressure relief mechanism 22.

The center 222 of the pressure relief mechanism 22 is the geometric center of the pressure relief mechanism 22, e.g., the geometric center of the figure of the pressure relief mechanism 22 on the first wall 213 when viewed in the thickness direction. For ease of description, in FIG. 15, the center 222 of the pressure relief mechanism 22 is indicated by a cross mark.

The central axis P3 of the adapter member 242 in the width direction thereof refers to the center line of the adapter member 242 in the width direction of the adapter member 242. It does not necessarily require that structures on the two sides of the central axis P3 be symmetrical about the central axis P3. The central axis P3 of the adapter member 242 in the width direction thereof can be an axis perpendicular to the width direction of the adapter member 242, i.e., an extension direction of the central axis P3 of the adapter member 242 can be parallel to a length direction of the adapter member 242 when the adapter member 242 is in the unfolded state.

A positive projection of the central axis P3 of the adapter member 242 in the width direction thereof on the first wall 213 can be the projection of the central axis P3 on the first wall 213 in the thickness direction of the first wall 213. The positive projection of the central axis P3 of the adapter member 242 on the first wall 213 can include the positive projection of the extension line of the central axis P3 on the first wall 213.

In the unfolded state of the adapter member 242, the positive projection of the central axis P3 of the adapter member 242 in the width direction thereof on the first wall 213 does not pass through the center 222 of the pressure relief mechanism 22. The unfolded state of the adapter member 242 herein can refer to the unfolded state of the adapter member 242 when the adapter member 242 is formed together with the first wall 213 and the electrode lead-out portion 23.

The central axis P4 of the electrode lead-out portion 23 in a width direction thereof can be an axis perpendicular to the width direction of the electrode lead-out portion 23, i.e., an extension direction of the central axis P4 of the electrode lead-out portion 23 can be parallel to a length direction of the electrode lead-out portion 23. In some embodiments, the width direction of the electrode lead-out portion 23 can be parallel to the width direction of the adapter member 242, which is conducive to the connection of the adapter member 242 to the electrode lead-out portion 23.

The central axis P3 of the adapter member 242 does not pass through the center 222 of the pressure relief mechanism 22, so that the pressure relief mechanism 22 is disposed eccentrically relative to the central axis P3 of the adapter member 242. The pressure relief mechanism 22 occupies a relatively large space on the side of the central axis P3 of the adapter member 242, and the pressure relief mechanism 22 occupies a relatively small space on the other side of the central axis P3 of the adapter member 242. Other functional zones (for example, a code identifying zone) can be disposed on the side of the first wall 324 positioned at the central axis P3 of the adapter member 242, that is not provided with the center 222 of the pressure relief mechanism 22, to rationally utilize a space on the two sides of the central axis P3 of the adapter member 242. The code identifying zone is a zone for obtaining information about the battery cell 20. The positive projection of the central axis P4 of the electrode lead-out portion 23 does not pass through the center 222 of the pressure relief mechanism 22, so that the pressure relief mechanism 22 is disposed eccentrically relative to the central axis P4 of the electrode lead-out portion 23. The pressure relief mechanism 22 occupies a relatively large space on one side of the central axis P4 of the electrode lead-out portion 23, and the pressure relief mechanism 22 occupies a relatively small space on the other side of the central axis P4 of the electrode lead-out portion 23. Other functional zones (for example, the code identifying zone) can be disposed on the other side of the first wall 213 positioned at the central axis P4 of the electrode lead-out portion 23 to rationally utilize a space on the two sides of the central axis of the electrode lead-out portion.

Please refer to FIG. 13, according to some embodiments of the present application, the first wall 213 is provided with the electrode lead-out portion 23. The code identifying zone 2131 is disposed on the outer surface of the first wall 213. The code identifying zone 2131 and the pressure relief mechanism 22 are located on the side of the electrode lead-out portion 23.

The outer surface of the first wall 213 is the surface of the first wall 213 away from the interior of the battery cell 20. The code identifying zone 2131 is an identity identification zone of the battery cell 20.

The code identifying zone 2131 and the pressure relief mechanism 22 are positioned on the side of the electrode lead-out portion 23, that is, the code identifying zone 2131 and the pressure relief mechanism 22 are positioned on the side of the electrode lead-out portion 23 in the length direction thereof.

The code identifying zone 2131 and the pressure relief mechanism 22 are positioned on the side of the electrode lead-out portion 23, thereby rationally utilizing a space of the first wall 213.

Please refer to FIG. 15, according to some embodiments of the present application, the code identifying zone 2131 is disposed on the outer surface of the first wall 213. The centers 222 of the code identifying zone 2131 and the pressure relief mechanism 22 are respectively disposed on the two sides of the central axis P3 of the adapter member 242 in the width direction thereof.

The code identifying zone 2131 is the identity identification zone of the battery cell 20. The code identifying zone 2131 is disposed on the side of the first wall 213 away from the interior of the battery cell 20. The information about the battery cell 20 is obtained by scanning, manual input, or the like.

The information about the battery cell 20 can be, but is not limited to, the capacity, the date of manufacturing, the place of manufacturing, and the like of the battery cell 20. A carrier for recording the information about the battery cell 20 can be a graphic, for example, a QR code graphic, or can be a bar code, or can be a number or a word. The code identifying zone 2131 can be formed by spraying a paint, or can be formed by laser engraving.

The code identifying zone 2131 is disposed to reasonably utilize the space of the first wall 213 and be conducive to the access to the information about the battery cell 20.

Please refer to FIG. 12, according to some embodiments of the present application, the first wall 213 is provided with an injection hole 29.

The injection hole 29 is configured to inject the electrolyte solution into the interior of the battery cell 20.

In an embodiment in which "the positive projection of the central axis P3 of the adapter member 242 in the width direction thereof on the first wall 213 does not pass through the center 222 of the pressure relief mechanism 22", the first wall 213 has a relatively large space. The injection hole 29 is disposed in the first wall 213, which is able to reasonably utilize the space of the first wall 213, and allows a structure on the first wall 213 to be compact.

Please refer to FIGS. 13 and 14, according to some embodiments of the present application, the gap control portion 260 includes the first sub-support member 261a and the second sub-support member 261b. The pressure relief mechanism 22 is disposed between the first sub-support member 261a and the second sub-support member 261b. The first sub-support member 261a and the second sub-support member 261b are configured to be able to restrict the adapter member 242 from shielding the pressure relief hole 221 formed by the pressure relief mechanism 22 in the event of the thermal runaway of the battery cell 20. The gap control portion 260 further includes the reinforcing portion 243. The adapter member 242 includes the first connecting section 2421. The first connecting section 2421 is configured to be connected to the tab 241. The reinforcing portion 243 is disposed at the first connecting section 2421. In the thickness direction Z of the first wall 213, the projection of at least a part of the first sub-support member 261a or at least a part of the second sub-support member 261b on the adapter member 242 is overlapped with the reinforcing portion 243. The battery cell 20 further includes the insulator 27. The insulator 27 is positioned between the first wall 213 and the adapter member 242. The insulator 27 is configured to insulate and isolate the first wall 213 from the adapter member 242. The insulator 27 includes the third surface 271 facing the first wall 213. The plurality of first grooves 272 are formed at the third surface 271. At least a part of the first sub-support member 261a and at least a part of the second sub-support member 261b are disposed within one of the first grooves 272, respectively.

Please refer to FIG. 14, in the thickness direction of the first wall 213, the projection of the first sub-support member 261a on the adapter member 242 is overlapped with the reinforcing portion 243.

The pressure relief mechanism 22 is disposed between the first sub-support member 261a and the second sub-support member 261b, which is conducive to the stop of the adapter member 242 at two positions, thereby further ensuring the stop effect of the support member 26. When the projection of the reinforcing portion 243 covers at least a part of the first sub-support member 261a or at least a part of the second sub-support member 261b, at least a part of the first sub-support member 261a or at least a part of the second sub-support member 261b can block the adapter member 242 from being deformed toward the pressure relief mechanism 22, which increases the difficulty in the deformation of the adapter member 242, and reduces the risk of the deformation of the adapter member 242 that shields the pressure relief hole 221. At least a part of the first sub-support member 261a and at least a part of the second sub-support member 261b are disposed in one of the first grooves 272, respectively, which is also able to reduce a space occupied by a structure after the first sub-support member 261a and the second sub-support member 261b are assembled with the insulator 27 while ensuring the insulating effect of the first wall 213 and the adapter member 242.

Please refer to FIG. 14, according to some embodiments of the present application, the insulator 27 further includes the fourth surface 273. The fourth surface 273 is disposed away from the first wall 213. The protruding portion 2722 is formed at a position on the fourth surface 273 corresponding to the first groove 272. In the thickness direction Z of the first wall 213, the protruding portion 2722 corresponding to the first sub-support member 261a is opposite to the reinforcing portion 243. The protruding portion 2722 corresponding to the second sub-support member 261b is opposite to the zone of the first connecting section 2421 that is not provided with the reinforcing portion 243.

The fourth surface 273 and the third surface 271 can be disposed opposite to each other in a thickness direction of the insulator 27. The fourth surface 273 can be disposed facing the electrode assembly 25. The thickness direction of the insulator 27 is parallel to the thickness direction of the first wall 213.

The protruding portion 2722 corresponding to the first sub-support member 261a is opposite to the reinforcing portion 243, that is, when viewed in the thickness direction of the first wall 213, the protruding portion 2722 can be at least partially overlapped with the reinforcing portion 243. The reinforcing portion 243 can be disposed on the surface of the first connecting section 2421 facing the first wall 213 or on the surface of the first connecting section 2421 away from the first wall 213.

In some embodiments, the reinforcing portion 243 can be disposed on the surface of the first connecting section 2421 facing the first wall 213. The protruding portion 2722 corresponding to the first sub-support member 261a is in contact with the reinforcing portion 243. The protruding portion 2722 corresponding to the second sub-support member 261b is in contact with the first connecting section 2421, so that the first sub-support member 261a and the second sub-support member 261b, after cooperating with the insulator 27, are able to have a better limiting effect on the adapter member 242 and the reinforcing portion 243. The contact herein can also be "abutted against", so that the protruding portion 2722 exerts a force on the adapter member 242 and the reinforcing portion 243.

Please refer to FIG. 14, according to some embodiments of the present application, in the thickness direction Z of the first wall 213, the height G1 of the protruding portion 2722 corresponding to the first sub-support member 261a protruding from the fourth surface 273 is disclosed. The height G2 of the protruding portion 2722 corresponding to the second sub-support member 261b protruding from the fourth surface 273 is disclosed, where G2 > G1.

That is, the protruding portion 2722 corresponding to the second sub-support member 261b protrudes more from the fourth surface 273 relative to the protruding portion 2722 corresponding to the first sub-support member 261a.

In the above solution, the two protruding portions 2722 have a height difference, which, on the one hand, can be conducive to the prevention of the reinforcing portion 243. On the other hand, the protruding portion 2722 corresponding to the second sub-support member 261b can better cooperate with the zone of the first connecting section 2421 which is not provided with the reinforcing portion 243.

In some embodiments, the dimension of the first sub-support member 261a in the thickness direction of the first wall 213 and the dimension of the second sub-support member 261b in the thickness direction of the first wall 213 can be the same, thereby being conducive to processing and manufacturing.

Please refer to FIG. 3, according to some embodiments of the present application, the shell 21 further includes a second wall 214. The second wall 214 and the first wall 213 are disposed opposite to each other in the thickness direction of the first wall 213. The second wall 214 and the first wall 213 are both provided with the pressure relief mechanism 22.

Both the second wall 214 and the first wall 213 can be the cover bodies 212. The second wall 214 and the first wall 213 can be disposed at the opposite ends of the housing 211.

In the above solution, the second wall 214 and the first wall 213 are both provided with the pressure relief mechanism 22, which is conducive to the timely relief of a pressure inside the battery cell 20 at the opposite ends of the shell 21, thereby allowing the battery cell 20 to be highly reliable.

Please refer to FIGS. 3, 15 and 16, according to some embodiments of the present application, the tab 241 includes a first tab 241a and a second tab 241b. The first tab 241a and the second tab 241b have opposite polarities. The adapter member 242 includes a first adapter member 242c and a second adapter member 242d. The first adapter member 242c is disposed in correspondence to the first wall 213 and connected to the first tab 241a. The second adapter member 242d is disposed in correspondence to the second wall 214 and connected to the second tab 241b. In an unfolded state of the first adapter member 242c, the positive projection of the central axis P3 of the first adapter member 242c in a width direction thereof on the first wall 213 does not pass through the center 222 of the pressure relief mechanism 22 disposed on the first wall 213. In an unfolded state of the second adapter member 242d, the positive projection of the central axis P3 of the second adapter member 242d in a width direction thereof on the second wall 214 passes through the center 222 of the pressure relief mechanism 22 disposed on the second wall 214.

The first tab 241a can be the positive tab, and the second tab 241b can be the negative tab; or, the first tab 241a can be the negative tab, and the second tab 241b can be the positive tab.

The polarity of the first adapter member 242c is opposite to that of the second adapter member 242d. The first adapter member 242c and the second adapter member 242d can be two adapter members 242 with the same structure, but of course the structures can also be different.

In some embodiments, two electrode lead-out portions 23 can be disposed. One of the electrode lead-out portions 23 is disposed at the first wall 213 and connected to the first adapter member 242c, and the other electrode lead-out portion 23 is disposed at the second wall 214 and connected to the second adapter member 242d. In other embodiments, one electrode lead-out portion 23 can also be disposed. The electrode lead-out portion 23 is disposed at the first wall 213 and connected to the first adapter member 242c. The second adapter member 242d is connected to the second wall 214.

Accordingly, the gap control portion 260 and the insulator 27 are disposed on a side corresponding to the first wall 213. The gap control portion 260 and the insulator 27 are also disposed on a side corresponding to the second wall 214. The gap control portions 260 can be the same or different on two sides.

"The positive projection of the central axis P3 of the second adapter member 242d in the width direction thereof on the second wall 214 passes through the center 222 of the pressure relief mechanism 22 disposed on the second wall 214" can be such that, when viewed in a thickness direction of the second wall 214, the second adapter member 242d has a relatively large overlap area with the pressure relief mechanism 22.

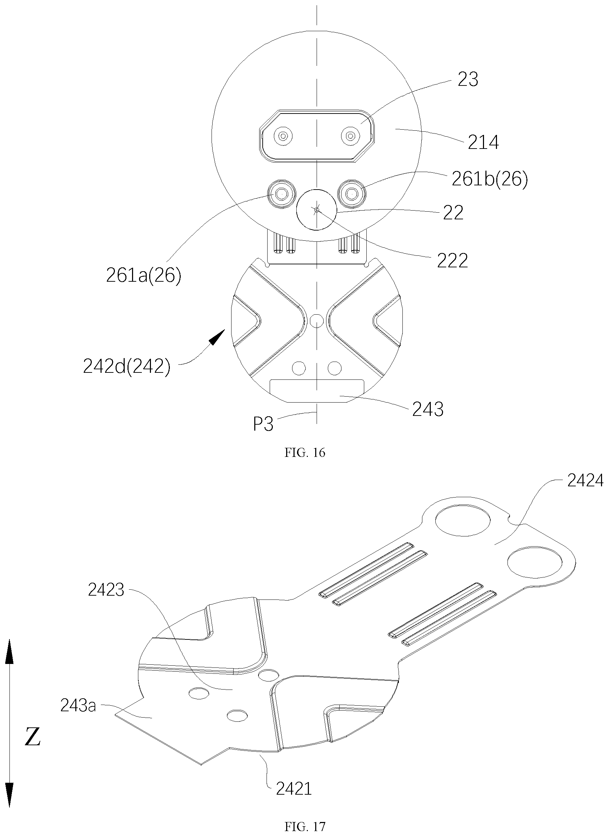

In the above solution, as shown in FIG. 15, the positive projection of the central axis P3 of the first adapter member 242c in the width direction thereof on the first wall 213 does not pass through the center 222 of the pressure relief mechanism 22 disposed on the first wall 213. Other functional zones (for example, the code identifying zone 2131 and the injection hole 29) can be disposed on the first wall 213. As shown in FIG. 16, the positive projection of the central axis P3 of the second adapter member 242d in the width direction thereof on the second wall 214 passes through the center 222 of the pressure relief mechanism 22 disposed on the second wall 214. The second wall 214 can be provided with the fewer functional zones for being connected to other components.

In some embodiments, in the unfolded state of the first adapter member 242c, the positive projection of the central axis P3 of the first adapter member 242c in the width direction thereof on the first wall 213 can not pass through the center 222 of the pressure relief mechanism 22 disposed on the first wall 213. In the unfolded state of the second adapter member 242d, the positive projection of the central axis P3 of the second adapter member 242d in the width direction thereof on the second wall 214 can not pass through the center 222 of the pressure relief mechanism 22 disposed on the second wall 214.

In other embodiments, in the unfolded state of the first adapter member 242c, the positive projection of the central axis P3 of the first adapter member 242c in the width direction thereof on the first wall 213 can pass through the center 222 of the pressure relief mechanism 22 disposed on the first wall 213. In the unfolded state of the second adapter member 242d, the positive projection of the central axis P3 of the second adapter member 242d in the width direction thereof on the second wall 214 can pass through the center 222 of the pressure relief mechanism 22 disposed on the second wall 214.

Please refer to FIG. 3, according to some embodiments of the present application, the shell 21 includes the housing 211. The housing 211 has openings at opposite ends. The first wall 213 and the second wall 214 are respectively connected to the openings at the two ends of the housing 211. The electrode lead-out portion 23 includes a positive electrode lead-out portion and a negative electrode lead-out portion. The positive electrode lead-out portion is disposed at the first wall 213. The negative electrode lead-out portion is disposed at the second wall 214.

The housing 211 has the openings at the opposite ends. The housing 211 can be a cylindrical structure, for example, the housing 211 can be a hollow cylindrical cylinder.

The housing 211 has openings at two ends in the thickness direction of the first wall 213. The first wall 213 and the second wall 214 are disposed opposite to each other in the thickness direction of the first wall 213. The first wall 213 and the second wall 214 are respectively connected to the openings of the two ends of the housing 211. The first wall 213, the second wall 214, and the housing 211 enclose a closed accommodating space. The electrode assembly 25 is accommodated within the accommodating space.

The positive electrode lead-out portion and the negative electrode lead-out portion are the two electrode lead-out portions 23 with opposite polarities.

In the above solution, the positive electrode lead-out portion is disposed at the first wall 213, and the negative electrode lead-out portion is disposed at the second wall 214, which is conducive to the electrical connection of the battery cell 20 to other components (e.g., the battery cell, a sampling member, and the like). When the positive projection of the central axis P3 of the first adapter member 242c in the width direction thereof on the first wall 213 does not pass through the center 222 of the pressure relief mechanism 22 disposed on the first wall 213, the other functional zones (for example, the code identifying zone 2131 and the injection hole 29) can be disposed on the first wall 213.

As shown in FIGS. 5 and 8, the first sub-support member 261a and the second sub-support member 261b are spaced apart in a first direction X. The distance L1 between the center line P1 of the first sub-support member 261a and the center line P2 of the second sub-support member 261b is disclosed. The dimension L2 of the reinforcing portion 243 in the first direction X is disclosed, where L1 ≤ L2.

In the figure, a direction indicated by a letter X is the first direction. The first direction X is perpendicular to the direction Z.

Optionally, taking as example the cross-section of the first sub-support member 261a and the cross-section of the second sub-support member 261b being regular shapes, the distance from the center line of the reinforcing portion 243 to the center line of the first sub-support member 261a and the distance from the center line of the reinforcing portion 243 to the center line of the second sub-support member 261b are equal to ensure that in the event of the thermal runaway of the battery cell 20, the blocking forces of the reinforcing portion 243 stressed by the first sub-support member 261a and the second sub-support member 261b are equal.

In the above solution, the distance L1 between the center line P1 of the first sub-support member 261a and the center line P2 of the second sub-support member 261b and the dimension L2 of the reinforcing portion 243 in the first direction X meet the above relationship, thereby ensuring that the reinforcing portion 243 has a relatively large overlap area with the first sub-support member 261a and the second sub-support member 261b. In the event of the thermal runaway of the battery cell 20, the reinforcing portion 243 is able to lap at the first sub-support member 261a and the second sub-support member 261b. The first sub-support member 261a and the second sub-support member 261b better block the reinforcing portion 243, which reduces the risk of the deformation of the reinforcing portion 243 that shields and clogs the pressure relief hole.

Please refer to FIG. 8, according to some embodiments of the present application, the adapter member 242 includes the first connecting section 2421. The first connecting section 2421 is configured to be connected to the tab 241 (see FIG. 3). The reinforcing portion 243 is disposed at the first connecting section 2421.

The adapter member 242 further includes the second connecting section 2424. The second connecting section 2424 is connected to the electrode lead-out portion 23. The first connecting section 2421 and the second connecting section 2424 can be disposed at the opposite ends of the adapter member 242. The reinforcing portion 243 is disposed at the first connecting section 2421. Under the action of an external force (e.g., an airflow), the position or zone of the first connecting section 2421 where the reinforcing portion 243 is disposed is not prone to deformation. In the event of the thermal runaway of the battery cell 20, the deformation of the tab 241 directly causes the first connecting section 2421 to deform and approach toward the first wall 213. Therefore, the reinforcing portion 243 is disposed at the first connecting section 2421, which can effectively increase the difficulty in the deformation of the first connecting section 2421. In addition, the first connecting section 2421 generally has a relatively large area. The projection of the first connecting section 2421 on the first wall 213 covers the pressure relief mechanism 22. The second connecting section 2424 generally has a relatively small area. The projection of the second connecting section 2424 on the first wall 213 does not cover the pressure relief mechanism 22. Therefore, the reinforcing portion 243 is disposed on the first connecting section 2421.

In some embodiments, the first connecting section 2421 can also be referred to as a tab connecting section. The second connecting section 2424 can also be referred to as a lead-out portion connecting section.

Please refer to FIG. 8, according to some embodiments of the present application, the insulator 27 includes the third surface 271 and the fourth surface 273 disposed opposite to each other in the thickness direction Z of the first wall 213. The third surface 271 is disposed facing the first wall 213. The fourth surface 273 is disposed away from the first wall 213. The third surface 271 forms the first groove 272. The protruding portion 2722 is formed at a position on the fourth surface 273 corresponding to the first groove 272. In the thickness direction, the distance H1 between the end face of the protruding portion 2722 away from the fourth surface 273 and the first wall 213 is disclosed. The distance H2 between the first connecting section 2421 and the first wall 213 is disclosed. The thickness W1 of the reinforcing portion 243 in the thickness direction is disclosed, where H1+W1≤H2.

H1, W1 and H2 meet the above relationship, thereby reducing an occupied space. Therefore, the support member 26 is able to be abutted against the reinforcing portion 243 in the event of the thermal runaway of the battery cell 20 and after the insulator 27 is melted, thereby restricting the adapter member 242 from shielding the pressure relief hole 221 formed by the pressure relief mechanism 22.

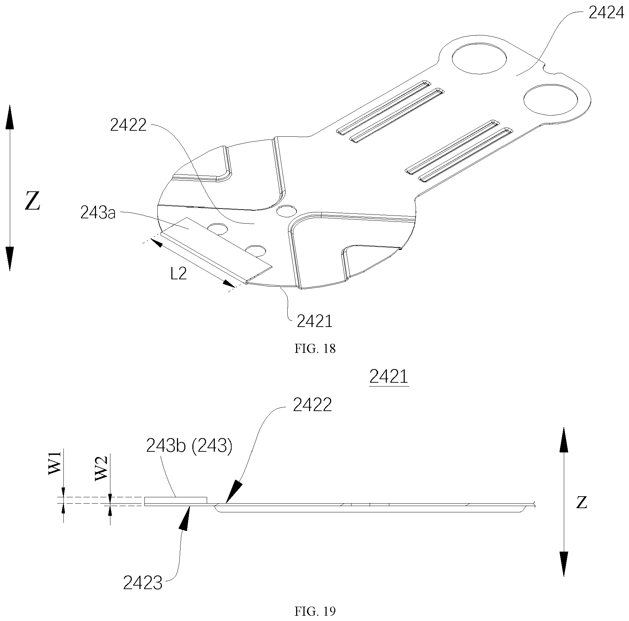

Please refer to FIGS. 17 and 18, according to some embodiments of the present application, as shown in FIGS. 17 and 18, the reinforcing portion 243 is a first flipping portion 243a of the first connecting section 2421. The first connecting section 2421 has a first surface 2422 facing the first wall 213 (refer to FIG. 4) and a second surface 2423 away from the first wall 213. The first flipping portion 243a is bent to the side of the first surface 2422 or the first flipping portion 243a is bent to the side of the second surface 2423.

The reinforcing portion 243 can be a flipping structure of the first connecting section 2421.

The first surface 2422 and the second surface 2423 can be two surfaces opposite to each other in the thickness direction of the first connecting section 2421. The thickness direction of the first connecting section 2421 can be parallel to the thickness direction Z of the first wall 213.

As shown in FIG. 18, the first flipping portion 243a is bent to the side of the first surface 2422. In other words, the reinforcing portion 243 is bent from the side of the first connecting section 2421 toward the first surface 2422 to form the first flipping portion 243a. The first flipping portion 243a is bent to the side of the second surface 2423. In other words, the reinforcing portion 243 is bent from the side of the first connecting section 2421 toward the second surface 2423 to form the first flipping portion 243a.

The reinforcing portion 243 is the first flipping portion 243a. The first flipping portion 243a is bent to the side of the first surface 2422 or the first flipping portion 243a is bent to the side of the second surface 2423, which is conducive to processing and molding.

In some embodiments, the reinforcing portion 243 is connected to the edge of the first connecting section 2421 to be conducive to bending.

According to some embodiments of the present application, the first flipping portion 243a is bent to the side of the first surface 2422, and the first flipping portion 243a is affixed to the first surface 2422; or, the first flipping portion 243a is bent to the side of the second surface 2423, and the first flipping portion 243a is affixed to the second surface 2423.

As shown in FIG. 18, the first flipping portion 243a is affixed to the first surface 2422. The first flipping portion 243a has a relatively large contact area with the first surface 2422. In the event of the thermal runaway of the battery cell 20, when the airflow acts on the first connecting section 2421, the first flipping portion 243a is able to block the first surface 2422 from being deformed toward the first wall 213, thereby making it more difficult to deform the covered zone of the first flipping portion 243a and the first surface 2422, and reducing the risk of the first connecting section 2421 for shielding and clogging the pressure relief hole.

The first flipping portion 243a is affixed to the second surface 2423. The first flipping portion 243a has a relatively large contact area with the second surface 2423. In the event of the thermal runaway of the battery cell 20, when the airflow acts on the first connecting section 2421, the second surface 2423 is able to block the first flipping portion 243a from being deformed toward the first wall 213, thereby making it more difficult to deform the covered zone of the first flipping portion 243a and the second surface 2423, and reducing the risk of the first connecting section 2421 shielding and clogging the pressure relief hole.

Please refer to FIG. 19, FIG. 19 shows a schematic structural view of the reinforcing portion provided by some embodiments of the present application. According to some embodiments of the present application, as shown in FIG. 19, the first connecting section 2421 has the first surface 2422 facing the first wall 213 and the second surface 2423 away from the first wall 213. The first surface 2422 forms the protrusion 243b. The protrusion 243b is a reinforcing portion 243.

The first surface 2422 and the second surface 2423 can be two surfaces opposite to each other in the thickness direction of the first connecting section 2421. When the reinforcing portion 243 is the protrusion 243b formed on the first surface 2422, the reinforcing portion 243 protrudes from the first surface 2422 in the thickness direction of the first connecting section 2421.

The first connecting section 2421 includes a main body zone 242a. The main body zone 242a is connected to the tab 241. The reinforcing portion 243 is disposed at the main body zone 242a. The reinforcing portion 243 can be disposed separately from the main body zone 242a. The reinforcing portion 243 is fixed to the first surface 2422, for example, the reinforcing portion 243 is of a plate-shaped or sheet-shaped structure. The reinforcing portion 243 is welded to the main body zone 242a. Alternatively, the reinforcing portion 243 is one part of the main body zone 242a, e.g., the reinforcing portion 243 is the part of the first connecting section 2421 that is stamped and formed, or the reinforcing portion 243 is the part of the first connecting section 2421 that is locally thicker.

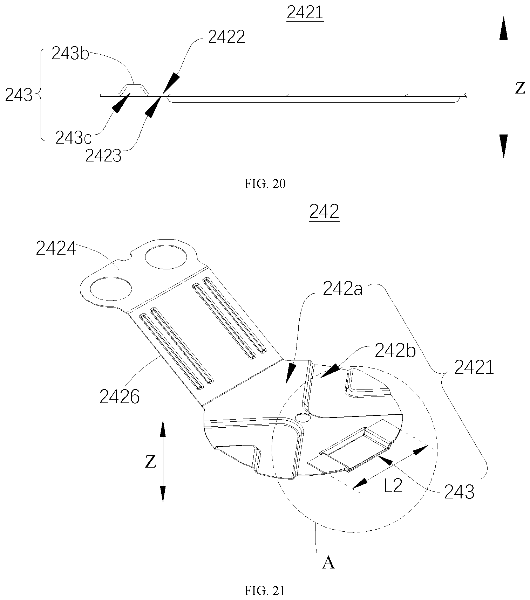

Please refer to FIG. 20, FIG. 20 shows a schematic structural diagram of the reinforcing portion provided by some other embodiments of the present application. According to some embodiments of the present application, a second groove 243c is formed at a position of the second surface 2423 corresponding to the protrusion 243b.

In some embodiments, as shown in FIG. 20, the reinforcing portion 243 is a structure integrally molded in the first connecting section 2421. The reinforcing portion 243 protrudes from the first surface 2422. The second groove 243c is formed at the position of the second surface 2423 corresponding to the protrusion 243b. Based on the above structure, the reinforcing portion 243 can be a reinforcing rib stamped and molded in the first connecting section 2421.

In the above solution, the second groove 243c corresponding to the protrusion is formed on the second surface 2423, which is conducive to the processing and molding of the reinforcing portion 243 on the one hand, and is able to reduce the weight of the first connecting section 2421 on the other hand.

According to some embodiments of the present application, as shown in FIGS. 18 to 20, the reinforcing portion 243 is positioned on the side of the first connecting section 2421 toward the first wall 213 (please refer to FIG. 4).

The first connecting section 2421 has the first surface 2422 facing the first wall 213. The reinforcing portion 243 is positioned on the side of the first connecting section 2421 disposed on the first surface 2422. In other words, the reinforcing portion 243 is disposed on the first surface 2422.

The reinforcing portion 243 is positioned on the side of the first connecting section 2421 toward the first wall 213, which can limit the deformation of the first connecting section 2421 toward the first wall 213, and reduce the risk of the first connecting section 2421 shielding and clogging the pressure relief hole.

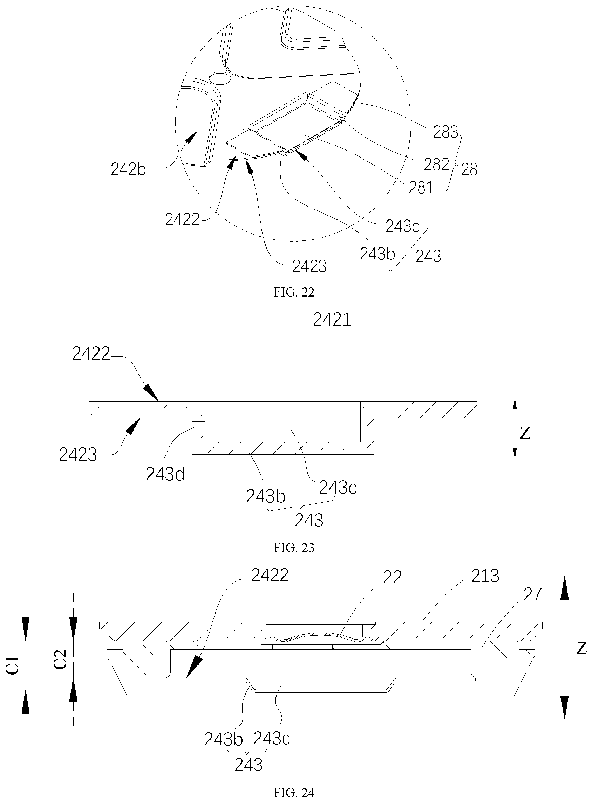

Please refer to FIG. 21 and FIG. 22, FIG. 21 shows a schematic structural diagram of the reinforcing portion provided by yet some embodiments of the present application. FIG. 22 shows a partially enlarged view at A of FIG. 21. According to some embodiments of the present application, the first connecting section 2421 has the first surface 2422 facing the first wall 213 and the second surface 2423 away from the first wall 213. The reinforcing portion 243 forms the protrusion 243b on the second surface 2423. The reinforcing portion 243 forms the second groove 243c at the position of the first surface 2422 corresponding to the protrusion 243b.

The reinforcing portion 243 can be stamped and molded from the adapter member 242. The reinforcing portion 243 forms the protrusion 243b on the second surface 2423 and forms the second groove 243c on the first surface 2422, thereby increasing the strength of the adapter member 242 and making it more difficult for the adapter member 242 to be deformed toward the first wall 213.

In some embodiments, the second groove 243c can also be referred to as a concave portion. The protrusion 243b can also be referred to as a convex portion.

According to some embodiments of the present application, the projection of the second groove 243c on the first wall 213 at least partially covers the pressure relief mechanism 22.

The projection of the second groove 243c on the first wall 213 at least partially covers the pressure relief mechanism 22. That is, the projection of the second groove 243c on the first wall 213 covers only a part of the pressure relief mechanism 22; or, the projection of the second groove 243c on the first wall 213 completely covers the pressure relief mechanism 22. In the above setting form, in the thickness direction Z of the first wall 213, a gap is formed between the pressure relief mechanism 22 and the first connecting section 2421, which reduces the risk of the first connecting section 2421 shielding and clogging the pressure relief hole.

In the above solution, the projection of the second groove 243c on the first wall 213 at least partially covers the pressure relief mechanism 22, so that it is not easy for the reinforcing portion 243 to be deformed to shield or clog the pressure relief hole, thereby ensuring the smoothness of the pressure relief of the battery cell 20.

According to some embodiments of the present application, as shown in FIGS. 21 and 22, the second groove 243c extends to the edge of the adapter member 242.

In an embodiment in which the reinforcing portion 243 is disposed in the first connecting section 2421, the second groove 243c can extend to the edge of the first connecting section 2421, so that the second groove 243c is communicated with a space on the side of the first connecting section 2421. When the gas inside the battery cell 20 flows toward the pressure relief mechanism 22, the gas can flow into the second groove 243c via the edge of the first connecting section 2421 and flow toward the pressure relief mechanism 22.

In the above solution, the second groove 243c extends to the edge of the adapter member 242, which is conducive to the formation of a channel for the flow of the gas at the position of the reinforcing portion 243, is conducive to the flow of the gas toward the pressure relief mechanism 22 via the reinforcing portion 243, and is conducive to the pressure being relieved by the pressure relief mechanism 22.

Please refer to FIG. 23, FIG. 23 shows a schematic view of a first exhaust channel provided by some embodiments of the present application. According to some embodiments of the present application, the first exhaust channel 243d communicating the interior of the second groove 243c with the exterior of the second groove 243c is disposed at the wall of the second groove 243c.

The first exhaust channel 243d is a channel passing through the wall of the second groove 243c. The first exhaust channel 243d can be the through hole.

In the above solution, the first exhaust channel 243d communicates the interior of the second groove 243c with the exterior of the second groove 243c, so that the gas enters the second groove 243c via the first exhaust channel 243d and flows toward the pressure relief mechanism 22, thereby ensuring the gas to flow smoothly, and be conducive to the pressure being relieved by the pressure relief mechanism 22.

Please refer to FIG. 24, FIG. 24 shows a sectional view of a part of components of the battery cell provided by some embodiments of the present application. According to some embodiments of the present application, in the thickness direction Z of the first wall 213, the distance C1 between the bottom surface of the second groove 243c and first wall 213 is disclosed. The distance C2 between the first surface 2422 and the first wall 213 is disclosed, where 0.5 mm ≤ C1-C2 ≤ 5 mm.

In the thickness direction Z, the opening of the second groove 243c faces the first wall 213. The second groove 243c is formed by recessing the first surface 2422 in the thickness direction in a direction away from the first wall 213. The bottom surface of the second groove 243c is the surface of the second groove 243c facing the first wall 213. The bottom surface of the second groove 243c is away from the first wall 213 relative to the first surface 2422.

In the above solution, the distance C1 between the bottom surface of the second groove 243c and the first wall 213 and the distance C2 between the first surface 2422 and the first wall 213 meet the above relationship, which ensures that the gas flows toward the pressure relief mechanism 22. Therefore, the reinforcing portion 243 is not easy to clog the pressure relief hole even if the reinforcing portion is deformed. Further, it is able to also ensure that the reinforcing portion 243 does not occupy a too much assembly space. It ensures that the battery cell 20 has a relatively high energy density. In the event of the thermal runaway of the battery cell 20, the reinforcing portion 243 is deformed. If a value of the distance C1 between the bottom surface of the second groove 243c and the first wall 213 minus the distance C2 between the first surface 2422 and the first wall 213 is less than 0.5 mm, the deformed reinforcing portion 243 is likely to shield and clog the pressure relief hole, thus affecting the pressure being relieved by the pressure relief mechanism 22. If a value of the distance C1 between the bottom surface of the second groove 243c and the first wall 213 minus the distance C2 between the first surface 2422 and the first wall 213 is greater than 5 mm, the reinforcing portion 243 occupies a relatively large mounting space in the thickness direction Z, thereby affecting the energy density of the battery cell 20.

Optionally, a difference between the distance C1 between the bottom surface of the second groove 243c and the first wall 213 and the distance C2 between the first surface 2422 and the first wall 213 can be 0.5mm, 1mm, 1.5mm, 2mm, 2.5mm, 3mm, 3.5mm, 4mm, 4.5mmm, or 5mm or the like.

According to some embodiments of the present application, 1 mm ≤ C1-C2 ≤ 3 mm.

The distance C1 between the bottom surface of the second groove 243c and the first wall 213 and the distance C2 between the first surface 2422 and the first wall 213 meet the above relationship, which further ensures that the gas flows smoothly toward the pressure relief mechanism 22, and at the same time reasonably utilizes the assembly space and ensures the energy density of the battery cell 20, compared to 0.5 mm ≤ C1-C2 ≤ 5 mm.

Optionally, the difference between the distance C1 between the bottom surface of the second groove 243c and the first wall 213 and the distance C2 between the first surface 2422 and the first wall 213 can be 1 mm, 1.5 mm, 2 mm, 2.5 mm, or 3 mm or the like.

According to some embodiments of the present application, as shown in FIGS. 21 and 22, the battery cell 20 further includes a second support member 28. The second support member 28 includes a second bottom wall 281 and a second side wall 282. The second bottom wall 281 is affixed to the bottom surface of the second groove 243c. The second side wall 282 is formed on the edge of the second bottom wall 281. The second side wall 282 is affixed to the side surface of the second groove 243c.

In some embodiments, the second support member 28 can also be referred to as a reinforcing member.

The second support member 28 is a component that acts as a support for the reinforcing portion 243. The second support member 28 is able to restrain the deformation of the reinforcing portion 243 in the event of the thermal runaway of the battery cell 20, thereby making it more difficult for the reinforcing portion 243 to deform.

The second bottom wall 281 and the second side wall 282 are two constituent parts of the second support member 28. The second side wall 282 is formed on the edge of the second bottom wall 281. The second side wall 282 and the second bottom wall 281 are integrally molded.

The second bottom wall 281 is affixed to the bottom surface of the second groove 243c. The second bottom wall 281 has a relatively large contact area with the bottom surface of the second groove 243c. The second bottom wall 281 has a better shielding effect on the bottom surface of the second groove 243c. The second bottom wall 281 can be welded to the bottom surface of the second groove 243c to ensure that the second bottom wall 281 and the bottom surface of the second groove 243c have a better connection strength.

The second side wall 282 is affixed to the side surface of the second groove 243c. The second side wall 282 has a relatively large contact area with the side surface of the second groove 243c. The second side wall 282 has a better blocking effect on the side surface of the second groove 243c. The second side wall 282 can be welded to the side surface of the second groove 243c to ensure that the second side wall 282 and the side surface of the second groove 243c have a better connection strength.

In the above solution, the second support member 28 is disposed in the second groove 243c. The second bottom wall 281 is affixed to the bottom surface of the second groove 243c. The second side wall 282 is affixed to the side surface of the second groove 243c. The contour of the second support member 28 is adapted with the contour of the second groove 243c, which further increases the strength of the reinforcing portion 243, reduces the risk of the pressure relief mechanism 22 being shielded and clogged, and ensures that the pressure relief mechanism 22 relieves the pressure.

According to some embodiments of the present application, as shown in FIG. 22, the second support member 28 further includes a second flipping portion 283. The second flipping portion 283 is connected to the second side wall 282. The second flipping portion 283 is located on the exterior of the second groove 243c and affixed to first surface 2422.

The second flipping portion 283 is a flipping structure connected to the second side wall 282.

The second flipping portion 283 is located on the exterior of the second groove 243c and affixed to the first surface 2422 so that the second support member 28 has a better connection stability with the first connecting section 2421. The second flipping portion 283 can be welded to the first surface 2422 to ensure a better connection strength between the second flipping portion 283 and the first connecting section 2421.

The second flipping portion 283 is affixed to the first surface 2422, thereby ensuring that the second support member 28 has a relatively large connection area with the adapter member 242, and ensuring that the second support member 28 has a better connection stability with the adapter member 242.

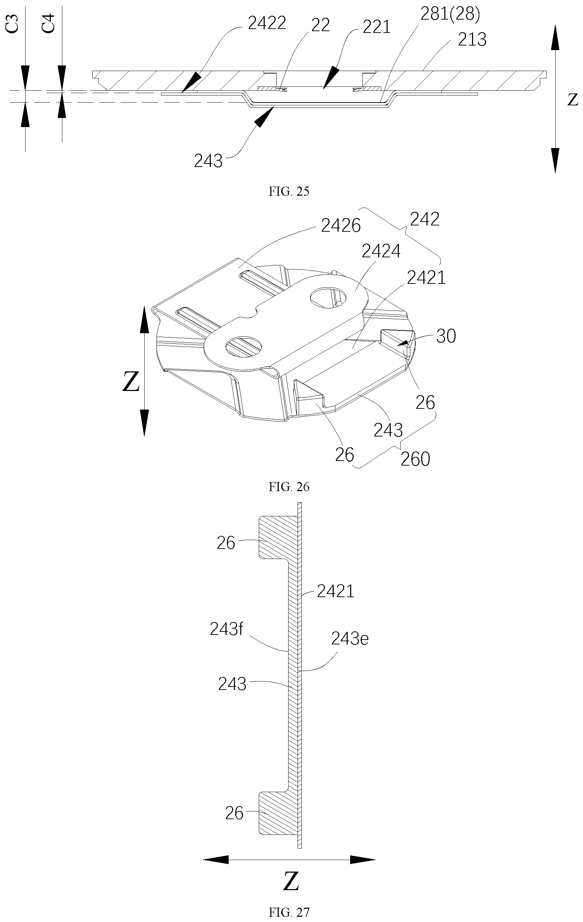

Please refer to FIG. 25, FIG. 25 shows a partial sectional view of the battery cell 20 after the thermal runaway (the insulator is melted) provided by some other embodiments of the present application. FIG. 25 shows a sectional view of a part of the structure of the battery cell 20 after the thermal runaway of the battery cell 20. According to some embodiments of the present application, after the battery cell 20 undergoes the thermal runaway, the insulator 27 is melted, the distance C3 between the surface of the second bottom wall 281 facing the first wall 213 and the first wall 213 is disclosed. The distance C4 between the first surface 2422 and the first wall 213 is disclosed, where 0.5 mm ≤ C3-C4 ≤ 5 mm.

In the above solution, after the battery cell 20 undergoes the thermal runaway, the distance C3 between the surface of the second bottom wall 281 facing the first wall 213 and the first wall 213 and the distance C4 between the first surface 2422 and the first wall 213 meet the above relationship, which ensures that the gas flows toward the pressure relief mechanism 22. Therefore, the reinforcing portion 243 is not easy to clog the pressure relief hole 221 even if the reinforcing portion 243 is deformed. Further, it is able to also ensure that the reinforcing portion 243 and the second support 28 do not occupy the too much assembly space. It ensures that the battery cell 20 has a relatively high energy density. In the event of the thermal runaway of the battery cell 20, the reinforcing portion 243 is deformed. If a value of the distance C3 between the surface of the second bottom wall 281 facing the first wall 213 and the first wall 213 minus the distance C4 between the first surface 2422 and the first wall 213 is less than 0.5 mm, the second support member 28 is likely to shield and clog the pressure relief hole after the reinforcing portion 243 is deformed, thus affecting the pressure being relieved by the pressure relief mechanism 22. If the value of the distance C3 between the surface of the second bottom wall 281 facing the first wall 213 and the first wall 213 minus the distance C4 between the first surface 2422 and the first wall 213 is greater than 5 mm, the reinforcing portion 243 and the second support member 28 take up a relatively large mounting space in the thickness direction Z, which affects the energy density of the battery cell 20.

According to some embodiments of the present application, as shown in FIG. 21, the first connecting section 2421 includes the main body zone 242a and a connecting zone 242b. The connecting zone 242b is connected to the tab 241. The reinforcing portion 243 is disposed in the main body zone 242a.

The connecting zone 242b is a zone for being directly connected to the tab 241. The connecting zone 242b can be welded to the tab 241 to ensure the stability of the connection of the first connecting section 2421 to the tab 241. The connecting zone 242b is connected to the tab 241 so that the reinforcing portion 243 is disposed in the main body zone 242a, thereby avoiding that the reinforcing portion 243 interferes with the connection of the first connecting section 2421 to the tab 241.

Please refer to FIG. 22, according to some embodiments of the present application, the connecting zone 242b protrudes from the second surface 2423. The height of the reinforcing portion 243 protruding from the second surface 2423 is less than or equal to the height of the connecting zone 242b protruding from the second surface 2423.

In the above solution, the height of the reinforcing portion 243 protruding from the second surface 2423 is less than or equal to the height of the connecting zone 242b protruding from the second surface 2423. The reinforcing portion 243 occupies a less space in the thickness direction Z, thereby avoiding the interference with the connection of the connecting zone 242b to the tab 241 under the premise of ensuring the strength of the reinforcing portion 243.

According to some embodiments of the present application, the thickness W1 of the reinforcing portion 243 is disclosed, and the thickness W2 of the body zone 242a is disclosed, where W1/W2 > 1.1.

In an embodiment in which the reinforcing portion 243 is integrally molded with the first connecting section 2421, the reinforcing portion 243 can be a locally thicker part of the first connecting section 2421.

As shown in FIG. 19, in an embodiment in which the reinforcing portion 243 is disposed separately from the first connecting section 2421, the reinforcing portion 243 can be in the form of a plate or a sheet. The materials of the main body zone 242a and the reinforcing portion 243 can be the same. The thickness W1 of the reinforcing portion 243 and the thickness W2 of the main body zone 242a meet the above relationship. The strength of the reinforcing portion 243 is greater than that of other parts of the main body zone 242a that are not provided with the reinforcing portion 243, making it more difficult to deform the reinforcing portion 243.

In an embodiment in which the reinforcing portion 243 is a protrusion formed on the first surface 2422, the thickness W1 of the reinforcing portion 243 can be the height of the reinforcing portion 243 protruding from the first surface 2422.

Please refer to FIG. 26, according to some embodiments of the present application, the gap control portion 260 is fixed to the adapter member 242.

Please refer to FIG. 26, according to some embodiments of the present application, the adapter member 242 includes the first connecting section 2421. The first connecting section 2421 is configured to be connected to the tab 241 (please refer to FIG. 3). The gap control portion 260 is disposed on the side of the first connecting section 2421 away from the tab 241.

The gap control portion 260 is disposed on the side of the first connecting section 2421 away from the tab 241, which can improve a space utilization rate and is conducive to the connection of the first connecting section 2421 to the tab 241.

Please refer to FIGS. 3, 26, and 27, according to some embodiments of the present application, the gap control portion 260 includes the reinforcing portion 243 and the support member 26. The reinforcing portion 243 has a first face 243e and a second face 243f disposed opposite to each other in the thickness direction of the first wall 213. The first face 243e is connected to the first connecting section 2421. The support member 26 protrudes from the second face 243f. The support member 26 is configured to cooperate with the first wall 213 in the event of the thermal runaway of the battery cell 20 to form the pressure relief channel 30.

The first face 243e and the second face 243f are two faces disposed opposite to each other in a thickness direction of the reinforcing portion 243. The first face 243e and the second face 243f can be planar surfaces, e.g., the first face 243e and the second face 243f can be perpendicular to the thickness direction of the first wall 213. The first face 243e and the second face 243f can be intersected with the thickness direction of the first wall 213; or, the first face 243e and the second face 243f can also be curved faces. The thickness direction of the reinforcing portion 243 is parallel to the thickness direction of the first wall 213. The first face 243e can be the face of the reinforcing portion 243 facing the electrode assembly 25. The second face 243f can be the face of the reinforcing portion 243 away from the electrode assembly 25.

The first face 243e is connected to the first connecting section 2421. The first face 243e can be affixed to the first connecting section 2421. The first face 243e has a large connection area with the first connecting section 2421 so that the first face 243e can be stably connected to the first connecting section 2421.

The support member 26 can protrude from the structure of the second face 243f, for example, the support member 26 can have a columnar structure.

When the insulator 27 is disposed on the side of the first wall 213 facing the electrode assembly 25, the support member 26 can be abutted against the insulator 27 so as to restrict the movement of the electrode assembly 25 inside the battery cell 20. In the event of the thermal runaway of the battery cell 20, the insulator 27 is melted. The support member 26 is able to cooperate with the first wall 213 to form the pressure relief channel 30. The high temperature and high pressure gas can move toward the pressure relief mechanism 22 through the pressure relief channel 30 and thus be discharged from the pressure relief hole.

In the above solution, the first face 243e is connected to the first connecting section 2421. The reinforcing portion 243 is able to increase the strength of the first connecting section 2421 and increase the difficulty in the deformation of the first connecting section 2421. The support member 26 is able to cooperate with the first wall 213 in the event of the thermal runaway of the battery cell 20 to form the pressure relief channel 30, which is conducive to the pressure being relieved by the battery cell 20 in a timely manner.

According to some embodiments of the present application, the reinforcing portion 243 can be welded to the first connecting section 2421, so that the reinforcing portion 243 is firmly connected to the first connecting section 2421. Welding can be ultrasonic welding, laser welding, or the like.

According to some embodiments of the present application, the reinforcing portion 243 can be bonded to the first connecting section 2421, for example, an electrically conductive adhesive can be disposed between the first face 243e and the first connecting section 2421 so that the first face 243e is bonded to the first connecting section 2421.

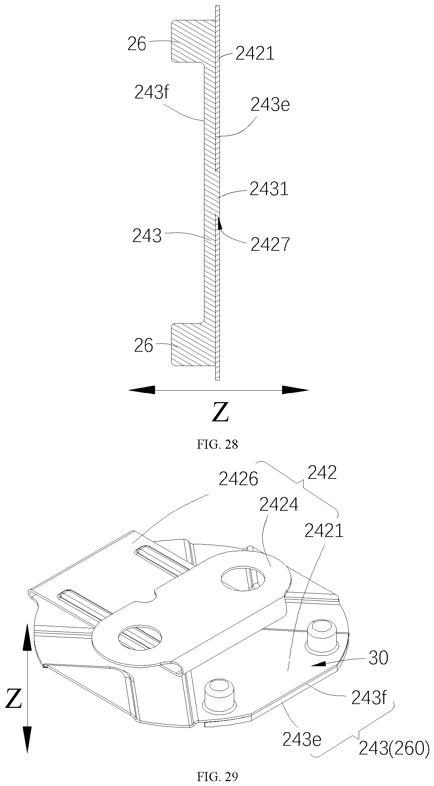

Please refer to FIG. 28, according to some embodiments of the present application, the first connecting section 2421 is provided with a first positioning portion 2427. A second positioning portion 2431 is formed at the first face 243e. The first positioning portion 2427 is disposed in correspondence to the second positioning portion 2431. The first positioning portion 2427 is able to cooperate with the second positioning portion 2431 to connect the first connecting section 2421 to the reinforcing portion 243.

As shown in FIG. 28, the first positioning portion 2427 can be the through hole. The second positioning portion 2431 can be a protruding structure. The second positioning portion 2431 is riveted to the first positioning portion 2427 to fix the reinforcing portion 243 to the first connecting section 2421. In other embodiments, the first positioning portion 2427 can also be a protruding structure. The second positioning portion 2431 can also be the through hole. The second positioning portion 2431 is riveted to the first positioning portion 2427.

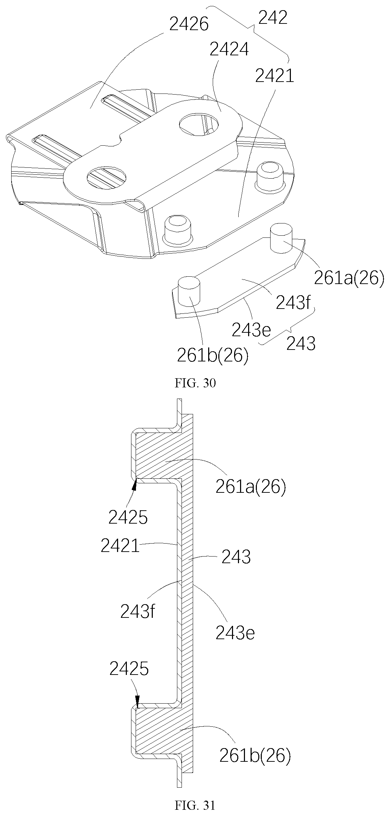

Please refer to FIGS. 29 and 30, according to some embodiments of the present application, the adapter member 242 includes the first connecting section 2421. The first connecting section 2421 is configured to be connected to the tab 241. The gap control portion 260 is disposed on the side of the first connecting section 2421 facing the tab 241.

The gap control portion 260 is disposed on the side of the first connecting section 2421 facing the tab 241, which is able to increase the strength of the first connecting section 2421, increase the difficulty in the deformation of the first connecting section 2421, and reduce the risk of the adapter member 242 shielding the pressure relief hole in the event of the thermal runaway of the battery cell 20.

Please refer to FIGS. 3, 29, and 30, according to some embodiments of the present application, the gap control portion 260 includes the reinforcing portion 243 and the support member 26. The reinforcing portion 243 has the first face 243e and the second face 243f disposed opposite to each other in the thickness direction of the first wall 213. The second face 243f is connected to the first connecting section 2421. The support member 26 protrudes from the second face 243f. The support member 26 is configured to cooperate with the first connecting section 2421 and the first wall 213 in the event of the thermal runaway of the battery cell 20 to form the pressure relief channel 30.

The second face 243f is connected to the first connecting section 2421. The second face 243f can be affixed to the first connecting section 2421. The second face 243f has a large connection area with the first connecting section 2421 so that the second face 243f can be stably connected to the first connecting section 2421.

The support member 26 protrudes from the second face 243f. The second face 243f is away from the electrode assembly 25. The support member 26 protrudes on the side of the reinforcing portion 243 away from the electrode assembly 25, so that the support member 26 is able to cooperate with the first connecting section 2421 and the first wall 213 in the event of the thermal runaway of the battery cell 20 to form the pressure relief channel 30.

In the above solution, the second face 243f is connected to the first connecting section 2421. The support member 26 protrudes from the second face 243f, which is able to increase the strength of the first connecting section 2421 and increase the difficulty of the deformation of the first connecting section 2421. The support member 26 is able to cooperate with the first connecting section 2421 and the first wall 213 in the event of the thermal runaway of the battery cell 20 to form the pressure relief channel 30, which is conducive to the pressure being relieved by the battery cell 20 in a timely manner.

In some embodiments, the gap control portion 260 includes the reinforcing portion 243 and the support member 26. The reinforcing portion 243 has the first face 243e and the second face 243f disposed opposite to each other in the thickness direction of the first wall 213. The second face 243f is connected to the first connecting section 2421. The support member 26 protrudes from the second face 243f. The support member 26 is configured to cooperate with the first connecting section 2421 and the first wall 213 in the event of the thermal runaway of the battery cell 20 to form the pressure relief channel 30.

In this solution, the support member 26 and the first connecting section 2421 are staggered from each other. The support member 26 is able to cooperate with the first wall 213 in the event of thermal runaway of the battery cell 20 to form the pressure relief channel 30.

Please refer to FIGS. 29 and 30, and further refer to FIG. 31, according to some embodiments of the present application, the first connecting section 2421 is provided with a concave portion 2425 corresponding to the support member 26. The support member 26 is inserted in the concave portion 2425.

The support member 26 is inserted in the concave portion 2425, so that the second face 243f can be affixed to the first connecting section 2421 and avoid a space being excessively occupied by the support member 26.

In the above solution, the support member 26 is inserted in the concave portion 2425, which reduces the too much internal space of the battery cell 20 occupied by the support member 26 while ensuring the stability of the connection of the gap control portion 260 to the first connecting section 2421, thereby effectively ensuring the energy density of the battery cell 20.

According to some embodiments of the present application, as shown in FIGS. 5, the support member 26 can include the first sub-support member 261a and the second sub-support member 261b. The pressure relief mechanism 22 is disposed between the first sub-support member 261a and the second sub-support member 261b.

As shown in FIG. 5, when viewed in the thickness direction of the first wall 213, the pressure relief mechanism 22 is disposed between the projections of the first sub-support member 261a and the second sub-support member 261b on the first wall 213. The pressure relief mechanism 22 is spatially staggeredly disposed with the first sub-support member 261a and the second sub-support member 261b, e.g., in the thickness direction of the first wall 213, the pressure relief mechanism 22 can be disposed with the first sub-support member 261a and the second sub-support member 261b in a layered manner.

The first sub-support member 261a and the second sub-support member 261b are disposed, thereby being conducive to cooperate with the first wall 213 at different positions in the event of the thermal runaway of the battery cell 20 to form the pressure relief channel 30. Therefore, the battery cell 20 can relieve pressure in a timely manner.

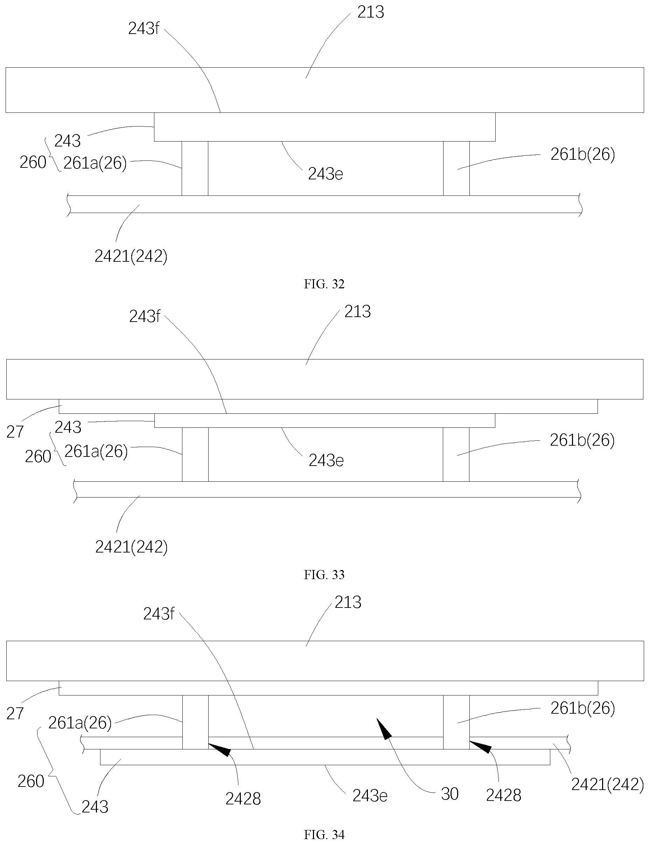

According to some embodiments of the present application, please refer to FIG. 32, the gap control portion 260 includes the reinforcing portion 243 and the support member 26. The reinforcing portion 243 is connected to the first wall 213. The support member 26 is disposed on the side of the reinforcing portion 243 away from the first wall 213. The support member 26 is configured to be abutted against the adapter member 242 in the event of the thermal runaway of the battery cell 20 to limit the adapter member 242 from shielding the pressure relief hole 221 formed by the pressure relief mechanism 22.

The reinforcing portion 243 can be welded to the first wall 213, or, the reinforcing portion 243 can be integrally molded with the first wall 213, or, the reinforcing portion 243 can be bonded to the first wall 213.

In some embodiments, the reinforcing portion 243 has the first face 243e and the second face 243f disposed opposite to each other in the thickness direction of the first wall 213. The first face 243e is connected to the first wall 213. The support member 26 protrudes from the second face 243f, e.g., the support member 26 includes the first sub-support member 261a and the second sub-support member 261b. The first sub-support member 261a and the second sub-support member 261b can be abutted against the first connecting section 2421 of the adapter member 242.

According to some embodiments of the present application, please refer to FIG. 33, the gap control portion 260 includes the reinforcing portion 243 and the support member 26. The reinforcing portion 243 is connected to the insulator 27. The support member 26 is disposed on the side of the reinforcing portion 243 away from the insulator 27. The support member 26 is abutted against the adapter member 242.

The support member 26 can be bonded to the insulator 27, or, the support member 26 can be snap-fitted with the insulator 27.

In some embodiments, the reinforcing portion 243 has the first face 243e and the second face 243f disposed opposite to each other in the thickness direction of the first wall 213. The first face 243e is connected to the insulator 27. The support member 26 protrudes from the second face 243f, e.g., the support member 26 includes the first sub-support member 261a and the second sub-support member 261b. The first sub-support member 261a and the second sub-support member 261b can be abutted against the first connecting section 2421 of the adapter member 242.

According to some embodiments of the present application, please refer to FIG. 34, the gap control portion 260 includes the reinforcing portion 243 and the support member 26. The reinforcing portion 243 is disposed on the side of the first connecting section 2421 facing the tab 241. The reinforcing portion 243 has the first face 243e and the second face 243f disposed opposite to each other in the thickness direction of the first wall 213. The second face 243f is connected to the first connecting section 2421. The support member 26 protrudes from the second face 243f. The first connecting section 2421 is provided with a mounting hole 2428 corresponding to the support member 26. The mounting hole 2428 passes through the first connecting section 2421 in the thickness direction of the first connecting section 2421. The support member 26 is inserted the mounting hole 2428. The support member 26 is abutted against the insulator 27. The support member 26 is configured to cooperate with the first wall 213 in the event of thermal runaway of the battery cell 20 to form the pressure relief channel 30.

The reinforcing portion 243 is disposed on the side of the first connecting section 2421 facing the tab 241, i.e., the reinforcing portion 243 is disposed on the side of the first connecting section 2421 away from the first wall 213. The support member 26 is inserted in the mounting hole 2428 and protrudes from the first connecting section 2421 to be abutted against the insulator 27. In the event of the thermal runaway of the battery cell 20, the insulator 27 is melted. The support member 26 is able to be abutted against the first wall 213 to form the pressure relief channel 30. The high temperature and high pressure gas inside the battery cell 20 is able to flow toward the pressure relief mechanism 22 via the pressure relief channel 30 and be discharged from the pressure relief hole 221.

The support member 26 is staggered with the second connecting section 2424 to avoid interference between the support member 26 and the second connecting section 2424.

According to some embodiments of the present application, the support member 26 and the reinforcing portion 243 are integrally molded.

The support member 26 and the reinforcing portion 243 are integrally molded, which is conducive to processing and manufacturing.

In the above embodiment, the reinforcing portion 243 can have a thickness greater than that of the part of the first connecting section 2421 connected to the reinforcing portion 243.

According to some embodiments of the present application, as shown in FIGS. 3 and 4, the tab 241 is formed at the end of the electrode assembly 25 close to the first wall 213. The electrode lead portion 23 is disposed at the first wall 213.

The electrode assembly 25 includes a main body portion 251 and the tab 241 extending from the main body portion 251. The tab 241 extends from the end of the main body portion 251 close to the first wall 213.

The electrode lead-out portion 23 is disposed at the first wall 213. The distance between the tab 241 and the first wall 213 is relatively small, so that the dimension of the adapter member 242 in the thickness direction Z of the first wall 213 is relatively small, which is conducive to the electrical connection of the tab 241 to the electrode lead-out portion 23.

According to some embodiments of the present application, as shown in FIGS. 3 and 4, the shell 21 includes the housing 211 and the cover body 212. The housing 211 has an opening. The electrode assembly 25 is disposed in the housing 211. The cover body 212 closes the opening to form a sealed space. The cover body 212 is the first wall 213. The electrode lead-out portion 23 is disposed at the cover body 212.

The pressure relief mechanism 22 and the electrode lead-out portion 23 are both disposed at the cover body 212. When the tab 241 is formed at the end of the electrode assembly 25 close to the cover body 212, a structure of the battery cell 20 is compact, which reasonably utilizes the assembly space.

In some embodiments, the first wall 213 can also be one wall of the housing 211.

According to some embodiments of the present application, as shown in FIG. 4, FIG. 11, and FIG. 26, the adapter member 242 further includes the third connecting section 2426. The third connecting section 2426 is connected to the first connecting section 2421 and the second connecting section 2424. To reduce the assembly space occupied by the adapter member 242, the third connecting section 2426 is bent relative to the first connecting section 2421. The third connecting section 2426 is bent relative to the second connecting section 2424. The adapter member 242 is of a Z shape.

In the unfolded state of the adapter member 242, the first connecting section 2421, the second connecting section 2424, and the third connecting section 2426 are disposed sequentially in the length direction of the adapter member 242.

In some embodiments, the third connecting section 2426 can also be referred to as a transition connecting section.

In the thickness direction Z, neither the projection of the second connecting section 2424 on the first wall 213 nor the projection of the third connecting section 2426 on the first wall 213 is overlapped with the pressure relief mechanism 22. The reinforcing portion 243 is positioned at the end that is of the first connecting section 2421 and that is away from a part connecting the first connecting section 2421 to the third connecting section 2426.

According to some embodiments of the present application, the present application further provides a battery 100, including a battery cell 20 according to any of the above embodiments.

According to some embodiments of the present application, the present application also provides an electrical device, including the battery 100 according to any of the preceding embodiments. The battery 100 is configured to provide electrical energy.

The electrical device can be a device or system applying the battery 100 according to any of the preceding embodiments.

Please refer to FIGS. 3 to 5, and further refer to FIGS. 8, 17, and 18, some embodiments of the present application provide a battery cell 20. The battery cell 20 includes a shell 21, an electrode assembly 25, an electrode lead-out portion 23, an adapter member 242, a pressure relief mechanism 22, a support member 26, and an insulator 27. The housing 21 includes a first wall 213. The pressure relief mechanism 22 and the electrode lead-out portion 23 are both disposed at the first wall 213. The electrode assembly 25 and the adapter member 242 are both disposed in the shell 21. The electrode assembly 25 is provided with a tab 241. The adapter member 242 includes a first connecting section 2421 and a second connecting section 2424. The first connecting section 2421 is connected to the tab 241. The second connecting section 2424 is connected to the electrode lead-out portion 23.

The support member 26 is fixed to the first wall 213. The support member 26 includes two sub-support members 261. The two sub-support members 261 are disposed on the opposite sides of the pressure relief mechanism 22.

The insulator 27 is disposed between the first wall 213 and the adapter member 242 for insulating and isolating the first wall 213 from the adapter member 242. The insulator 27 includes a third surface 271 facing the first wall 213. A first groove 272 is formed on the third surface 271. The ends of the two sub-support members 261 facing the adapter member 242 are accommodated in the first groove 272.

The first connecting section 2421 is provided with a reinforcing portion 243. The projection of the reinforcing portion 243 on the first wall 213 is overlapped at least partially with the projection of the support member 26 on the first wall 213 in the thickness direction of the first wall 213.

The reinforcing portion 243 is a first flipping portion 243a connected to the edge of the first connecting section 2421. The first connecting section 2421 has a first surface 2422 facing the first wall 213 and a second surface 2423 away from the first wall 213. The first flipping portion 243a is bent to the side of the first surface 2422.

Please refer to FIGS. 3 to 5, and further refer to FIGS. 8, 10, and 11, some embodiments of the present application provide a battery cell 20. The battery cell 20 includes a shell 21, an electrode assembly 25, an electrode lead-out portion 23, an adapter member 242, a pressure relief mechanism 22, a support member 26, and an insulator 27. The shell 21 includes a first wall 213. The pressure relief mechanism 22 and the electrode lead-out portion 23 are both disposed at the first wall 213. The electrode assembly 25 and the adapter member 242 are both disposed in the shell 21. The electrode assembly 25 is provided with a tab 241. The adapter member 242 includes a first connecting section 2421 and a second connecting section 2424. The first connecting section 2421 is connected to the tab 241. The second connecting section 2424 is connected to the electrode lead-out portion 23.

The support member 26 is fixed to the first wall 213. The support member 26 includes two sub-support members 261. The two sub-support members 261 are disposed on the opposite sides of the pressure relief mechanism 22.

The insulator 27 is disposed between the first wall 213 and the adapter member 242, for insulating and isolating the first wall 213 from the adapter member 242. The insulator 27 includes a third surface 271 facing the first wall 213. A first groove 272 is formed on the third surface 271. One end of two sub-support members 261 facing the adapter member 242 are accommodated in the first groove 272.

The first connecting section 2421 is provided with a reinforcing portion 243, along the thickness direction of the first wall 213, a projection of the reinforcing portion 243 on the first wall 213 at least partially overlaps the projection of the support member 26 on the first wall 213.

The first connecting section 2421 has a first surface 2422 facing the first wall 213 and a second surface 2423 away from the first wall 213. The first surface 2422 or the second surface 2423 forms a protrusion 243b. The protrusion 243b is the reinforcing portion 243.

Please refer to FIG. 3, and further refer to FIGS. 6, 7, and 9, some embodiments of the present application provide a battery cell 20. The battery cell 20 includes a shell 21, an electrode assembly 25, an electrode lead-out portion 23, an adapter member 242, a pressure relief mechanism 22, a support member 26, and an insulator 27. The shell 21 includes a first wall 213. The pressure relief mechanism 22 and the electrode lead-out portion 23 are both disposed at the first wall 213. The electrode assembly 25 and the adapter member 242 are both disposed in the shell 21. The electrode assembly 25 is provided with a tab 241. The adapter member 242 includes a first connecting section 2421 and a second connecting section 2424. The first connecting section 2421 is connected to the tab 241. The second connecting section 2424 is connected to the electrode lead-out portion 23.

The support member 26 is fixed to the first wall 213 and covers on and is disposed at the pressure relief mechanism 22. The support member 26 includes a first bottom wall 262 and a first side wall 263. The first bottom wall 262 and the pressure relief mechanism 22 are disposed opposite to each other in the thickness direction of the first wall 213. A gap is formed between the first bottom wall 262 and the pressure relief mechanism 22. The first side wall 263 is connected to the first bottom wall 262 and the first wall 213. The first side wall 263 has a second exhaust channel 264.

The insulator 27 is disposed between the first wall 213 and the adapter member 242 for insulating and isolating the first wall 213 from the adapter member 242. The insulator 27 includes a third surface 271 facing the first wall 213. A first groove 272 is formed on the third surface 271. The ends of the first bottom wall 262 and the first side wall 263 facing the adapter member 242 are accommodated in the first groove 272.

Please refer to FIG. 3, and further refer to FIG. 21, FIG. 22, FIG. 24, and FIG. 25, some embodiments of the present application provide a battery cell 20. The battery cell 20 includes a shell 21, an electrode assembly 25, an electrode lead-out portion 23, an adapter member 242, a pressure relief mechanism 22, an insulator 27, a reinforcing portion 243, and a second support member 28. The housing 21 includes a first wall 213. The pressure relief mechanism 22 and the electrode lead-out portion 23 are both disposed in the first wall 213. The electrode assembly 25 and the adapter member 242 are both disposed in the shell 21. The electrode assembly 25 is provided with a tab 241. The adapter member 242 includes a first connecting section 2421 and a second connecting section 2424. The first connecting section 2421 is connected to the tab 241. The second connecting section 2424 is connected to the electrode lead-out portion 23.

The insulator 27 is disposed between the first wall 213 and the adapter member 242 for insulating and isolating the first wall 213 from the adapter member 242.

The reinforcing portion 243 is disposed at the first connecting section 2421. The first connecting section 2421 has a first surface 2422 facing the first wall 213 and a second surface 2423 away from the first wall 213. The support member 26 forms a second groove 243c on the first surface 2422. A protrusion 243b is formed at the position of the second surface 2423 corresponding to the second groove 243c. In the thickness direction of the first wall 213, the projection of the second groove 243c on the first wall 213 covers the pressure relief mechanism 22. The second groove 243c extends to the edge of the first connecting section 2421.

The second support member 28 includes a second flipping portion 283, a second bottom wall 281, and a second side wall 282. The second bottom wall 281 is affixed to the bottom surface of the second groove 243c. The second side wall 282 is formed on the edge of the second bottom wall 281. The second side wall 282 is affixed to the side surface of the second groove 243c. The second flipping portion 283 is connected to the second side wall 282. The second flipping portion 283 is located on the exterior of the second groove 243c and affixed to the first surface 2422.

According to some embodiments of the present application, please refer to FIGS. 3, 4, and 26 to 27, the present application provides a cylindrical battery cell. The cylindrical battery cell includes a shell 21, a pressure relief mechanism 22, an electrode lead-out portion 23, an electrode assembly 25, an adapter member 242, a reinforcing portion 243, and a support member 26. The shell 21 includes a housing 211 and a cover body 212. The housing 211 has an opening. The cover body 212 encloses the opening to form a sealed space. The cover body 212 is a first wall 213. The pressure relief mechanism 22 is disposed on the first wall 213. The electrode lead-out portion 23 is disposed on the first wall 213. The electrode assembly 25 is disposed in the housing 211. The electrode assembly 25 is provided with a tab 241. The tab 241 is formed at the end of the electrode assembly 25 close to the first wall 213. The adapter member 242 includes a first connecting section 2421, a second connecting section 2424, and a third connecting section 2426. The third connecting section 2426 connects the first connecting section 2421 to the second connecting section 2424. The first connecting section 2421 is connected to the tab 241. The second connecting section 2424 is connected to the electrode lead-out portion 23. The reinforcing portion 243 is disposed on the side of the first connecting section 2421 away from the tab 241. The reinforcing portion 243 has a first face 243e and a second face 243f disposed opposite to each other in the thickness direction of the first wall 213. The first face 243e is connected to the first connecting section 2421. The support member 26 protrudes from the second face 243f. The support member 26 is configured to cooperate with the first wall 213 in the event of the thermal runaway of the battery cell 20 to form a pressure relief channel 30.

According to some embodiments of the present application, please refer to FIGS. 3, 4, and 29 to 31, the present application provides a cylindrical battery cell. The cylindrical battery cell includes a shell 21, a pressure relief mechanism 22, an electrode lead-out portion 23, an electrode assembly 25, an adapter member 242, a reinforcing portion 243, and a support member 26. The shell 21 includes a housing 211 and a cover body 212. The housing 211 has an opening. The cover body 212 encloses the opening to form a sealed space. The cover body 212 is a first wall 213. The pressure relief mechanism 22 is disposed on the first wall 213. The electrode lead-out portion 23 is disposed on the first wall 213. The electrode assembly 25 is disposed in the housing 211. The electrode assembly 25 is provided with a tab 241. The tab 241 is formed at the end of the electrode assembly 25 close to the first wall 213. The adapter member 242 includes a first connecting section 2421, a second connecting section 2424, and a third connecting section 2426. The third connecting section 2426 connects the first connecting section 2421 to the second connecting section 2424. The first connecting section 2421 is connected to the tab 241. The second connecting section 2424 is connected to the electrode lead-out portion 23. The reinforcing portion 243 and the support member 26 are disposed on a side of the first connecting section 2421 facing the tab 241. The reinforcing portion 243 has a first face 243e and a second face 243f disposed opposite to each other in the thickness direction of the first wall 213. The second face 243f is connected to the first connecting section 2421. The support member 26 protrudes from the second face 243f. The first connecting section 2421 is provided with a concave portion 2425 corresponding to the support member 26. The support member 26 is inserted in the concave portion 2425. The support member 26 is configured to cooperate with the first connecting section 2421 and the first wall 213 in the event of the thermal runaway of the battery cell 20 to form a pressure relief channel 30.

According to some embodiments of the present application, please refer to FIGS. 3, 5, and 12 to 16, the present application provides a cylindrical battery cell. The cylindrical battery cell includes a shell 21, a pressure relief mechanism 22, an electrode lead-out portion 23, an electrode assembly 25, an adapter member 242, a reinforcing portion 243, and a support member 26. The shell 21 includes a housing 211 and a cover body 212. The housing 211 has an opening. The cover body 212 encloses the opening to form a sealed space. Two cover bodies 212 are disposed. One cover body 212 is a first wall 213, and the other cover body 212 is a second wall 214. The housing 211 has two openings disposed opposite to each other. The first wall 213 and the second wall 214 are disposed opposite to each other and connected to the two openings, respectively. The first wall 213 and the second wall 214 are both provided with the pressure relief mechanism 22. The electrode lead-out portion 23 includes a positive electrode lead-out portion and a negative electrode lead-out portion. The positive electrode lead-out portion is disposed at the first wall 213. The negative electrode lead-out portion is disposed at the second wall 214.

The electrode assembly 25 is disposed in the housing 211. The electrode assembly 25 is provided with a first tab 241a and a second tab 241b. The first tab 241a is formed at the end of the electrode assembly 25 close to the first wall 213. The second tab 241b is formed at the end of the electrode assembly 25 close to the second wall 214. The adapter member 242 includes a first adapter member 242c and a second adapter member 242d. The first adapter member 242c connects the first tab 241a to the positive electrode lead-out portion. The second adapter member 242d connects the second tab 241b to the negative electrode lead-out portion. The following describes the connection manner among the adapter member 242, the pressure relief mechanism 22, the support member 26, the reinforcing portion 243, by taking as an example the adapter member 242, the pressure relief mechanism 22, the support member 26, the reinforcing portion 243 and other components corresponding to the first wall 213.

The adapter member 242 includes a first connecting section 2421, a second connecting section 2424, and a third connecting section 2426. The third connecting section 2426 connects the first connecting section 2421 and the second connecting section 2424. The first connecting section 2421 is connected to the tab 241. The second connecting section 2424 is connected to the electrode lead-out portion 23. The reinforcing portion 243 is disposed at the first connecting section 2421. The support member 26 includes a first sub-support member 261a and a second sub-support member 261b. The pressure relief mechanism 22 is disposed between the first sub-support member 261a and the second sub-support member 261b. In the thickness direction Z, the projection of the reinforcing portion 243 on the first wall 213 covers at least a part of the first sub-support member 261a and/or at least a part of second sub-support member 261b. The distance D between the projection of the support member 26 on the first wall 213 in the thickness direction and the pressure relief mechanism 22 is disclosed, where 1 mm ≤ D ≤ 20 mm. The projection of the central axis P3 of the adapter member 242 on the first wall 213 in the thickness direction does not pass through the center 222 of the pressure relief mechanism 22. A code identifying zone 2131 is disposed on the outer surface of the first wall 213. The code identifying zone 2131 is configured to obtain information about the battery cell 20. In addition, the first wall 213 is provided with an injection hole 29.

On the side of the second wall 214, in the unfolded state of the second adapter member 242d, the positive projection of the central axis P3 of the second adapter member 242d in the width direction thereof on the second wall 214 passes through the center 222 of the pressure relief mechanism 22 disposed on the second wall 214.

It is noted that the features of embodiments in the present application can be combined with each other without conflicts.

Although the present application has been described with reference to preferred embodiments, various improvements may be made thereto and components thereof may be replaced with equivalents without departing from the scope of the present application. Particularly, technical features mentioned in the embodiments may be combined in any manner as long as there is no structural conflict. the present application is not limited to the specific embodiments disclosed in this specification, but includes all technical solutions falling within the scope of the claims.

## Claims

1. A battery cell, comprising: a shell, having a first wall, the first wall being provided with a pressure relief mechanism;
an electrode lead-out portion, disposed on the shell;
an electrode assembly, disposed in the shell, the electrode assembly being provided with a tab;
an adapter member, connecting the electrode lead-out portion to the tab; and
a gap control portion, disposed in the shell, the gap control portion being configured to be able to restrict the adapter member from shielding a pressure relief hole formed by the pressure relief mechanism in the event of thermal runaway of the battery cell.

2. The battery cell according to claim 1, wherein the gap control portion comprises a support member, the support member is disposed between the first wall and the adapter member, the support member is configured to be able to restrict the adapter member from shielding the pressure relief hole formed by the pressure relief mechanism in the event of the thermal runaway of the battery cell.

3. The battery cell according to claim 2, wherein the support member has a melting point higher than 200°C.

4. The battery cell according to claim 2 or 3, wherein the support member is a metal member.

5. The battery cell according to any one of claims 2-4, wherein the support member is fixed to the first wall.

6. The battery cell according to claim 5, wherein the support member and the first wall are integrally molded.

7. The battery cell according to any one of claims 2-6, wherein the support member is disposed around the pressure relief mechanism.

8. The battery cell according to any one of claims 2-7, wherein the support member comprises a first sub-support member and a second sub-support member, and the pressure relief mechanism is disposed between the first sub-support member and the second sub-support member.

9. The battery cell according to claim 2, wherein the support member covers at the pressure relief mechanism, and the support member has a second exhaust channel for communicating an internal space of the support member with an external space of the support member.

10. The battery cell according to claim 9, wherein the support member comprises a first bottom wall and a first side wall, the first bottom wall and the pressure relief mechanism are disposed opposite to each other in a thickness direction of the first wall, a gap is formed between the first bottom wall and the pressure relief mechanism, the first side wall is connected to the first bottom wall and the first wall, and the second exhaust channel is formed in the first side wall.

11. The battery cell according to any one of claims 2-9, wherein the battery cell further comprises:
an insulator, the insulator is positioned between the first wall and the adapter member to insulate and isolate the first wall from the adapter member,
the support member has a melting point higher than that of the insulator, the support member is configured to prevent the adapter member from shielding the pressure relief hole formed by the pressure relief mechanism in the event of the thermal runaway of the battery cell after the insulator is melted.

12. The battery cell according to claim 11, wherein the insulator comprises a third surface facing the first wall, a first groove is formed on the third surface, and at least a part of the support member is accommodated within the first groove.

13. The battery cell according to any one of claims 1-8, wherein the gap control portion comprises a reinforcing portion, the adapter member comprises a first connecting section, the first connecting section is configured to be connected to the tab, and the reinforcing portion is disposed at the first connecting section.

14. The battery cell according to claim 13, wherein in the thickness direction of the first wall, a projection of the reinforcing portion on the first wall at least covers a part of the pressure relief mechanism.

15. The battery cell according to claim 13 or 14, wherein the gap control portion further comprises the support member, and at least a part of the support member is disposed between the first wall and the reinforcing portion.

16. The battery cell according to claim 15, wherein the support member comprises a first sub-support member and a second sub-support member, and the pressure relief mechanism is disposed between the first sub-support member and the second sub-support member.

17. The battery cell according to claim 16, wherein in the thickness direction of the first wall, the projection of the reinforcing portion on the first wall covers at least a part of the first sub-support member and/or at least a part of the second sub-support member.

18. The battery cell according to claim 17, wherein a projection of a center of the first sub-support member and/or a center of the second sub-support member on the adapter member falls into the reinforcing portion in the thickness direction.

19. The battery cell according to any one of claims 16-18, wherein a distance D between a projection of the support member on the first wall in the thickness direction of the first wall and the pressure relief mechanism meets 1 mm ≤ D ≤ 20 mm.

20. The battery cell according to claim 19, wherein 2 mm ≤ D ≤ 5 mm.

21. The battery cell according to any one of claims 1-20, wherein in an unfolded state of the adapter member, a positive projection of a central axis of the adapter member in a width direction thereof on the first wall does not pass through a center of the pressure relief mechanism, or, the first wall is provided with the electrode lead-out portion, a positive projection of an extension line of a central axis of the electrode lead-out portion in a width direction thereof on the first wall does not pass through the center of the pressure relief mechanism.

22. The battery cell according to claim 21, wherein the first wall is provided with the electrode lead-out portion, a code identifying zone is disposed on an outer surface of the first wall, and the code identifying zone and the pressure relief mechanism are located on a side of the electrode lead-out portion.

23. The battery cell according to claim 21 or 22, wherein the code identifying zone is disposed on the outer surface of the first wall, centers of the code identifying zone and the pressure relief mechanism are disposed on two sides of the central axis of the adapter member in the width direction thereof, respectively.

24. The battery cell according to any one of claims 21-23, wherein an injection hole is disposed on the first wall.

25. The battery cell according to any one of claims 21-24, wherein the gap control portion comprises a first sub-support member and a second sub-support member, the pressure relief mechanism is disposed between the first sub-support member and the second sub-support member, the first sub-support member and the second sub-support member are configured to be able to restrict the adapter member from shielding the pressure relief hole formed by the pressure relief mechanism in the event of the thermal runaway of the battery cell,
the gap control portion further comprises the reinforcing portion, the adapter member comprises the first connecting section, the first connecting section is configured to be connected to the tab, the reinforcing portion is disposed in the first connecting section, a projection of at least a part of the first sub-support member or at least a part of the second sub-support member on the adapter member is overlapped with the reinforcing portion in the thickness direction of the first wall,
the battery cell further comprises the insulator, the insulator is located between the first wall and the adapter member, the insulator is configured to insulate and isolate the first wall from the adapter member, the insulator comprises the third surface facing the first wall, the plurality of first grooves are formed on the third surface, and at least a part of the first sub-support member and at least a part of the second sub-support member are disposed in one of the first grooves, respectively.

26. The battery cell according to claim 25, wherein the insulator further comprises a fourth surface, the fourth surface is disposed away from the first wall, a protruding portion is formed at a position on the fourth surface corresponding to the first groove, in the thickness direction, the protruding portion corresponding to the first sub-support member is opposite to the reinforcing portion, and the protruding portion corresponding to the second sub-support member is opposite to a zone of the first connecting section which is not provided with the reinforcing portion.

27. The battery cell according to claim 26, wherein in the thickness direction, a height G1 of the protruding portion corresponding to the first sub-support member protruding from the fourth surface is disclosed, and a height G2 of the protruding portion corresponding to the second sub-support member protruding from the fourth surface is disclosed, satisfying G2 > G1.

28. The battery cell according to any one of claims 1-27, wherein the shell further comprises a second wall, the second wall and the first wall are disposed opposite to each other in the thickness direction of the first wall, and the second wall and the first wall are both provided with the pressure relief mechanism.

29. The battery cell according to claim 28, wherein the tab comprises a first tab and a second tab, the first tab and the second tab have opposite polarities, the adapter member comprises a first adapter member and a second adapter member, the first adapter member is disposed in correspondence to the first wall and connected to the first tab, the second adapter member is disposed in correspondence to the second wall and connected to the second tab, in an unfolded state of the first adapter member, a positive projection of a central axis of the first adapter member in a width direction thereof on the first wall does not pass through the center of the pressure relief mechanism disposed on the first wall, in an unfolded state of the second adapter member, a positive projection of a central axis of the second adapter member in a width direction thereof on the second wall passes through the center of the pressure relief mechanism disposed on the second wall.

30. The battery cell according to claim 28 or 29, wherein the shell comprises a housing, the housing has openings at opposite ends, the first wall and the second wall are connected to the openings at the two ends of the housing, the electrode lead-out portion comprises a positive electrode lead-out portion and a negative electrode lead-out portion, the positive electrode lead-out portion is disposed at the first wall, and the negative electrode lead-out portion is disposed at the second wall.

31. The battery cell according to any one of claims 13-30, wherein the reinforcing portion is a first flipping portion of the first connecting section, the first connecting section has a first surface facing the first wall and a second surface away from the first wall, and the first flipping portion is bent to a side of the first surface or the first flipping portion is bent to a side of the second surface.

32. The battery cell according to claim 31, wherein the first flipping portion is bent to the side of the first surface and the first flipping portion is affixed to the first surface; or,
the first flipping portion is bent to the side of the second surface and the first flipping portion is affixed to the second surface.

33. The battery cell according to any one of claims 13-32, wherein the first connecting section has the first surface facing the first wall and the second surface away from the first wall, a protrusion is formed on the first surface, and the protrusion is the reinforcing portion.

34. The battery cell according to claim 33, wherein a second groove is formed at a position of the second surface corresponding to the protrusion.

35. The battery cell according to any one of claims 13-34, wherein the first connecting section has the first surface facing the first wall and the second surface away from the first wall, the reinforcing portion forms the protrusion on the second surface, and the reinforcing portion forms the second groove at a position of the first surface corresponding to the protrusion.

36. The battery cell according to claim 35, wherein a projection of the second groove on the first wall at least partially covers the pressure relief mechanism.

37. The battery cell according to claim 35 or 36, wherein the second groove extends to an edge of the first connecting section.

38. The battery cell according to any one of claims 35-37, wherein a first exhaust channel for communicating an interior of the second groove with an exterior of the second groove is disposed on a wall of the second groove.

39. The battery cell according to any one of claims 35-38, wherein in the thickness direction of the first wall, a distance C1 between a bottom surface of the second groove and the first wall is disclosed, and a distance C2 between the first surface and the first wall is disclosed, satisfying 0.5mm ≤ C1-C2 ≤ 5mm.

40. The battery cell according to claim 39, wherein 1 mm ≤ C1-C2 ≤ 3 mm.

41. The battery cell according to any one of claims 35-40, wherein the battery cell further comprises:
a second support member, the second support member comprises a second bottom wall and a second side wall, the second bottom wall is affixed to the bottom surface of the second groove, the second side wall is formed on an edge of the second bottom wall, and the second side wall is affixed to a side surface of the second groove.

42. The battery cell according to claim 41, wherein the second support member further comprises a second flipping portion, the second flipping portion is connected to the second side wall, and the second flipping portion is located on the exterior of the second groove and affixed to the first surface.

43. The battery cell according to any one of claims 35-42, wherein the first connecting section comprises a main body zone and a connecting zone, the connecting zone is connected to the tab, and the reinforcing portion is disposed in the main body zone.

44. The battery cell according to claim 43, wherein the connecting zone protrudes from the second surface, a height of the reinforcing portion protruding from the second surface is less than or equal to a height of the connecting zone protruding from the second surface.

45. The battery cell according to any one of claims 1-44, wherein the adapter member comprises the first connecting section, the first connecting section is configured to be connected to the tab, and the gap control portion is disposed on a side of the first connecting section away from the tab.

46. The battery cell according to claim 45, wherein the gap control portion comprises the reinforcing portion and the support member, the reinforcing portion has a first face and a second face disposed opposite to each other in the thickness direction of the first wall, the first face is connected to the first connecting section, the support member protrudes from the second face, the support member is configured to cooperate with the first wall in the event of the thermal runaway of the battery cell to form a pressure relief channel.

47. The battery cell according to any one of claims 1-4, wherein the adapter member comprises the first connecting section, the first connecting section is configured to be connected to the tab, and the gap control portion is disposed on a side of the first connecting section facing the tab.

48. The battery cell according to claim 47, wherein the gap control portion comprises the reinforcing portion and the support member, the reinforcing portion has the first face and the second face disposed opposite to each other in the thickness direction of the first wall, the second face is connected to the first connecting section, the support member protrudes from the second face, the support member is configured to cooperate with the first connecting section and the first wall in the event of the thermal runaway of the battery cell to form the pressure relief channel.

49. The battery cell according to claim 48, wherein the first connecting section is provided with a concave portion corresponding to the support member, and the support member is inserted in the concave portion.

50. The battery cell according to claim 46 or 48, wherein the support member comprises the first sub-support member and the second sub-support member, and the pressure relief mechanism is disposed between the first sub-support member and the second sub-support member.

51. The battery cell according to claim 46 or 48, wherein the support member and the reinforcing portion are integrally molded.

52. The battery cell according to any one of claims 1-51, wherein the tab is formed at an end of the electrode assembly close to the first wall, and the electrode lead-out portion is disposed at the first wall.

53. A battery, comprising the battery cell according to any one of claims 1-52.

54. An electrical device, comprising the battery cell according to any one of claims 1-52.
